# EUROPEAN PATENT SPECIFICATION

(11) **EP 3 905 817 B1**
(45) Date of publication and mention of the grant of the patent: **29.10.2025**
(21) Application number: 20738433.0
(22) Date of filing: 10.01.2020
(51) Int. Cl.: H04L 5/00, H04W 4/40, H04W 92/18

(54) **SIDELINK REFERENCE SIGNAL TRANSMISSION METHOD AND COMMUNICATION DEVICE**
VERFAHREN ZUR ÜBERTRAGUNG VON SIDELINK-REFERENZSIGNALEN UND KOMMUNIKATIONSVORRICHTUNG
PROCÉDÉ DE TRANSMISSION DE SIGNAL DE RÉFÉRENCE DE LIAISON LATÉRALE ET DISPOSITIF DE COMMUNICATION

(30) Priority: 11.01.2019 CN 201910028732
(43) Date of publication of application: 03.11.2021
(73) Proprietor: Huawei Technologies Co., Ltd., Shenzhen, Guangdong 518129 (CN)
(72) Inventor: XIANG, Zhengzheng, Shenzhen, Guangdong 518129 (CN); ZHANG, Jinfang, Shenzhen, Guangdong 518129 (CN); GUO, Wenting, Shenzhen, Guangdong 518129 (CN); SU, Hongjia, Shenzhen, Guangdong 518129 (CN); LU, Lei, Shenzhen, Guangdong 518129 (CN)
(74) Representative: Maiwald GmbH
(86) International application number: PCT/CN2020/071358
(87) International publication number: WO 2020/143750

(56) References cited:
- EP-A1- 3 481 021
- WO-A1-2017/208609
- WO-A1-2018/030185
- CN-A- 107 733 818
- CN-A- 108 667 580
- ERICSSON: "Support of Unicast, Groupcast and Broadcast on the NR Sidelink", vol. RAN WG1, no. Chengdu, China; 20181001, 28 September 2018 (2018-09-28), XP051518989, Retrieved from the Internet <URL:http://www.3gpp.org/ftp/tsg%5Fran/WG1%5FRL1/TSGR1%5F94b/Docs/R1%2D1811591%2Ezip> [retrieved on 20180928]
- CATT: "Discussion on physical layer structure in NR V2X", vol. RAN WG1, no. Spokane, USA; 20181112 - 20181116, 11 November 2018 (2018-11-11), XP051554573, Retrieved from the Internet <URL:http://www.3gpp.org/ftp/Meetings%5F3GPP%5FSYNC/RAN1/Docs/R1%2D1812617%2Ezip> [retrieved on 20181111]
- SAMSUNG: "Discussion on Physical Layer Procedures", 3GPP TSG RAN WG1 MEETING #95 R1-1812985, 16 November 2019 (2019-11-16), XP051554964, DOI: 20200311095049Y
- SAMSUNG: "Discussion on Physical Layer Procedures", 3GPP TSG RAN WG1 MEETING #95 R1-1812985, 16 November 2019 (2019-11-16), XP051554964, DOI: 20200311095105X
- ERICSSON: "On SCI Formats", 3GPP TSG-RAN WG1 MEETING #94BIS R1-1813649, 12 October 2018 (2018-10-12), XP051555707, DOI: 20200311095252Y

## Description

### TECHNICAL FIELD

This application relates to the communication field, and more specifically, to a sidelink reference signal transmission method and a communication apparatus.

### BACKGROUND

Vehicle-to-everything (vehicle to everything, V2X) communication is an important key technology for implementing environment perception and information exchange in an internet of vehicles. Everything herein may be another vehicle, another infrastructure, a pedestrian, a terminal device, or the like. A sidelink (sidelink, SL) is a communication link between terminal devices, and a link in V2X communication is one type of sidelink. In V2X communication, a resource of a reference signal used to measure sidelink channel state information is configured by a network device, and the reference signal is sent by the network device. Consequently, efficiency and reliability of sending the SL reference signal are low, and user experience is severely affected.

ERICSSON: "Support of Unicast, Groupcast, and Broadcast on the NR sidelink", 3GPP DRAFT; R1-1811591 ERICSSON- SUPPORT OF UC, GC, BC, 3RD GENERATION PARTNERSHIP PROJECT (3GPP), MOBILE COMPETENCE CENTRE, 650, ROUTE DES LUCIOLES; F-06921 SOPHIA-ANTIPOLIS CEDEX; FRANCE, vol. RAN. WG 1, no. Chengdu, China, 20181001 28 September 2018, describes design cnonsiderations that aim to minimize the associated cost of additional signaling overhead, latency, and complexity.

CATT: "DISCUSSION ON PHYSICAL LAYER STRUCTURE IN NR V2X", 3GPP DRAFT; R1-1812617, 3RD GENERATION PARTNERSHIP PROJECT (3GPP), MOBILE COMPETENCE CENTRE; 650, ROUTE DES LUCIOLES, F.06921, SOPHIA.-ANTIPOLIS CEDEX; FRANCE, VOL. RAN WG1, NO. SPOKANE, USA; 20181112-20181116, 11 NOVEMBER 2018 discusses issues on NR side link physical layer structure. The discussion is mainly focus on the following topics: Resource pool and BWP, Waveform, Numerology, RS design, and Physical sidelink channel.

WO 2018/030185 A1 describes a communication device equipped with a control unit for allocating a prescribed gap to a boundary between the resource of a channel used in device-to-device communication and resources other than the resource of the channel in a communication method in which signals differing in transmission source are arranged in mixture.

WO 2017/208609 A1 describes a user device in a wireless communication system that supports multiple types of subframes to which an uplink, a down link, or a side link can be set as desired, wherein the user device has an acquisition unit for acquiring type information that indicates a type of subframe, a transmission unit for transmitting a side link signal in accordance with a transmit/receive operation that corresponds to the type of subframe indicated by the type information when transmitting a side link signal, and a reception unit for receiving a side link signal in accordance with a transmit/receive operation that corresponds to the type of subframe indicated by the type information when receiving a side link signal.

### SUMMARY

This application provides a sidelink reference signal transmission method, to improve flexibility and reliability of sending a sidelink reference signal on a sidelink, and reduce resource overheads of the sidelink reference signal. The invention is defined by the appended claims.

According to a first aspect, a sidelink reference signal transmission method is provided. The method may be performed by a first terminal device or a chip used in the first terminal device. The method includes: obtaining, by the first terminal device, a first time-frequency resource, where the first time-frequency resource is used to send sidelink control information and data; and sending, by the first terminal device on the first time-frequency resource, a sidelink reference signal, the sidelink control information, and the data to a second terminal device, where the sidelink reference signal is used to determine a channel status of a sidelink between the first terminal device and the second terminal device.

According to the sidelink reference signal transmission method provided in the first aspect, the sidelink reference signal is carried on the time-frequency resource used to send the sidelink control information and/or the data, and is sent together with the sidelink control information and/or the data. The sidelink reference signal can be flexibly and accurately sent in SL communication. No additional sending resource needs to be configured for the sidelink reference signal, thereby improving flexibility and reliability of sending the sidelink reference signal on the sidelink, and reducing resource overheads of the sidelink reference signal.

In a possible implementation of the first aspect, the sidelink control information is used to indicate configuration information of the sidelink reference signal.

In a possible implementation of the first aspect, the first terminal device sends the sidelink reference signal to the second terminal device on the last one or more symbols of the first time-frequency resource.

In a possible implementation of the first aspect, the first terminal device sends the sidelink reference signal to the second terminal device on any one or more symbols of the first time-frequency resource.

In a possible implementation of the first aspect, a frequency domain bandwidth of the sidelink reference signal is the same as a bandwidth of the first time-frequency resource, or a bandwidth of the sidelink reference signal is the same as a bandwidth of the data. In this implementation, when the frequency domain bandwidth of the sidelink reference signal is the same as the bandwidth of the first time-frequency resource, or the bandwidth of the sidelink reference signal is the same as a bandwidth of a PSSCH, the first terminal device may not need to additionally indicate the bandwidth of the sidelink reference signal, no extra resource needs to be occupied to indicate the bandwidth of the sidelink reference signal, so that resources can be saved, and resource utilization can be improved.

In a possible implementation of the first aspect, the control information includes the configuration information of the sidelink reference signal, or the control information includes indication information of the configuration information of the sidelink reference signal.

In a possible implementation of the first aspect, the indication information is a resource index of the sidelink reference signal, and the resource index of the sidelink reference signal corresponds to the configuration information of the sidelink reference signal.

In a possible implementation of the first aspect, the configuration information of the sidelink reference signal includes one or more of the following information: the bandwidth of the sidelink reference signal, a quantity of antenna ports of the sidelink reference signal, a quantity of symbols occupied by the sidelink reference signal, a density of the sidelink reference signal, a code division multiplexing manner of the sidelink reference signal, a resource mapping mode of the sidelink reference signal, and a scrambling identity of the sidelink reference signal.

In a possible implementation of the first aspect, the method further includes: sending, by the first terminal device to a network device, request information used to request the first time-frequency resource; and the obtaining, by the first terminal device, a first time-frequency resource includes: receiving, by the first terminal device, configuration information of the first time-frequency resource from the network device.

In a possible implementation of the first aspect, the obtaining, by the first terminal device, a first time-frequency resource includes:
determining, by the first terminal device, the first time-frequency resource in a sidelink resource set, where a time-frequency resource in the sidelink resource set is used to transmit sidelink information.

In a possible implementation of the first aspect, the first time-frequency resource is one slot or one mini-slot in time domain.

According to a second aspect, a sidelink reference signal transmission method is provided. The method may be performed by a second terminal device or a chip used in the second terminal device. The method includes: obtaining, by the second terminal device, a first time-frequency resource, where the first time-frequency resource is used to receive sidelink control information and data; and receiving, by the second terminal device on the first time-frequency resource, a sidelink reference signal, the sidelink control information, and the data from a first terminal device, where the sidelink reference signal is used to determine a channel status of a sidelink between the first terminal device and the second terminal device.

According to the sidelink reference signal transmission method provided in the second aspect, the sidelink reference signal is carried on the time-frequency resource used to receive the sidelink control information and/or the data, and is received together with the sidelink control information and/or the data. The sidelink reference signal can be flexibly and accurately received in SL communication. The sidelink reference signal does not need to be received on another resource, thereby improving flexibility and reliability of receiving the sidelink reference signal on the sidelink, and reducing resource overheads of the sidelink reference signal.

In a possible implementation of the second aspect, the sidelink control information is used to indicate configuration information of the sidelink reference signal.

In a possible implementation of the second aspect, the second terminal device receives the sidelink reference signal from the first terminal device on the last one or more symbols of the first time-frequency resource.

In a possible implementation of the second aspect, the second terminal device receives the sidelink reference signal from the first terminal device on any one or more symbols of the first time-frequency resource.

In a possible implementation of the second aspect, a frequency domain bandwidth of the sidelink reference signal is the same as a bandwidth of the first time-frequency resource, or a bandwidth of the sidelink reference signal is the same as a bandwidth of the data.

In a possible implementation of the second aspect, the control information includes the configuration information of the sidelink reference signal, or the control information includes indication information of the configuration information of the sidelink reference signal.

In a possible implementation of the second aspect, the indication information is a resource index of the sidelink reference signal, and the resource index of the sidelink reference signal corresponds to the configuration information of the sidelink reference signal.

In a possible implementation of the second aspect, the configuration information of the sidelink reference signal includes one or more of the following information: the bandwidth of the sidelink reference signal, a quantity of antenna ports of the sidelink reference signal, a quantity of symbols occupied by the sidelink reference signal, a density of the sidelink reference signal, a code division multiplexing manner of the sidelink reference signal, a resource mapping mode of the sidelink reference signal, and a scrambling identity of the sidelink reference signal.

In a possible implementation of the second aspect, the first time-frequency resource is one slot or one mini-slot in time domain.

According to a third aspect, a sidelink reference signal transmission method is provided. The method may be performed by a first terminal device or a chip used in the first terminal device. The method includes: obtaining, by the first terminal device, a second time-frequency resource, where the second time-frequency resource is used to send a sidelink reference signal; and sending, by the first terminal device on the second time-frequency resource, the sidelink reference signal and indication information to a second terminal device, where the indication information is used to indicate configuration information of the reference signal, and the sidelink reference signal is used to determine a channel status of a sidelink between the first terminal device and the second terminal device.

According to the sidelink reference signal transmission method provided in the third aspect, the terminal device can send the sidelink reference signal on the time-frequency resource separately used to send the sidelink reference signal, thereby improving flexibility and reliability of sending the sidelink reference signal on the sidelink.

In a possible implementation of the third aspect, the indication information is the configuration information of the sidelink reference signal, or the indication information is indication information of the configuration information of the sidelink reference signal.

In a possible implementation of the third aspect, the method further includes: sending, by the first terminal device to a network device, request information used to request the second time-frequency resource; and the obtaining, by the first terminal device, a second time-frequency resource includes:
receiving, by the first terminal device, configuration information of the second time-frequency resource from the network device.

In a possible implementation of the third aspect, the obtaining, by the first terminal device, a second time-frequency resource includes: determining, by the first terminal device, the second time-frequency resource in a sidelink resource set, where a time-frequency resource in the sidelink resource set is used to transmit sidelink information.

In a possible implementation of the third aspect, the second time-frequency resource is one slot or one mini-slot in time domain.

According to a fourth aspect, a sidelink reference signal transmission method is provided. The method may be performed by a second terminal device or a chip used in the second terminal device. The method includes: obtaining, by the second terminal device, a second time-frequency resource, where the second time-frequency resource is used to receive a sidelink reference signal; and receiving, by the second terminal device on the second time-frequency resource, the sidelink reference signal and indication information from a first terminal device, where the indication information is used to indicate configuration information of the reference signal, and the sidelink reference signal is used to determine a channel status of a sidelink between the first terminal device and the second terminal device.

According to the sidelink reference signal transmission method provided in the fourth aspect, the terminal device can receive the sidelink reference signal on the time-frequency resource separately used to receive the sidelink reference signal, thereby improving flexibility and reliability of receiving the sidelink reference signal on the sidelink.

In a possible implementation of the fourth aspect, the indication information is the configuration information of the sidelink reference signal, or the indication information is indication information of the configuration information of the sidelink reference signal.

In a possible implementation of the fourth aspect, the obtaining, by the second terminal device, a second time-frequency resource includes:
receiving, by the second terminal device, configuration information of the second time-frequency resource from a network device or the first terminal device.

In a possible implementation of the fourth aspect, the second time-frequency resource is one slot or one mini-slot in time domain.

According to a fifth aspect, a sidelink reference signal transmission method is provided. The method may be performed by a network device or a chip used in the network device. The method includes: determining, by the network device, a second time-frequency resource, where the second time-frequency resource is used to send a sidelink reference signal, and the sidelink reference signal is used to determine a channel status of a sidelink between a first terminal device and a second terminal device; and sending, by the network device, configuration information of the second time-frequency resource to the first terminal device and/or the second terminal device.

According to the sidelink reference signal transmission method provided in the fifth aspect, the time-frequency resource can be separately configured for the sidelink reference signal, thereby improving flexibility and reliability of transmitting the sidelink reference signal on the sidelink.

In a possible implementation of the fifth aspect, the determining, by the network device, a second time-frequency resource includes:
determining, by the network device, a sidelink resource set, where a time-frequency resource in the sidelink resource set is used to transmit sidelink information; and determining, by the network device, the second time-frequency resource in the sidelink resource set.

In a possible implementation of the fifth aspect, the method further includes:
receiving, by the network device from the first terminal device and/or the second terminal device, request information for the second time-frequency resource.

In a possible implementation of the fifth aspect, the second time-frequency resource is one slot or one mini-slot in time domain.

According to a sixth aspect, a communication apparatus is provided. The apparatus includes: a processing unit, configured to obtain a first time-frequency resource, where the first time-frequency resource is used to send sidelink control information and data; and a transceiver unit, configured to send, on the first time-frequency resource, a sidelink reference signal, the sidelink control information, and the data to a second terminal device, where the sidelink reference signal is used to determine a channel status of a sidelink between a first terminal device and the second terminal device; and the communication apparatus is the first terminal device, or the first terminal device includes the communication apparatus.

In a possible implementation of the sixth aspect, the sidelink control information is used to indicate configuration information of the sidelink reference signal.

In a possible implementation of the sixth aspect, the transceiver unit is specifically configured to send the sidelink reference signal to the second terminal device on the last one or more symbols of the first time-frequency resource.

In a possible implementation of the sixth aspect, the transceiver unit is specifically configured to send the sidelink reference signal to the second terminal device on any one or more symbols of the first time-frequency resource.

In a possible implementation of the sixth aspect, a frequency domain bandwidth of the sidelink reference signal is the same as a bandwidth of the first time-frequency resource, or a bandwidth of the sidelink reference signal is the same as a bandwidth of the data.

In a possible implementation of the sixth aspect, the control information includes the configuration information of the sidelink reference signal, or the control information includes indication information of the configuration information of the sidelink reference signal.

In a possible implementation of the sixth aspect, the indication information is a resource index of the sidelink reference signal, and the resource index of the sidelink reference signal corresponds to the configuration information of the sidelink reference signal.

In a possible implementation of the sixth aspect, the configuration information of the sidelink reference signal includes one or more of the following information: the bandwidth of the sidelink reference signal, a quantity of antenna ports of the sidelink reference signal, a quantity of symbols occupied by the sidelink reference signal, a density of the sidelink reference signal, a code division multiplexing manner of the sidelink reference signal, a resource mapping mode of the sidelink reference signal, and a scrambling identity of the sidelink reference signal.

In a possible implementation of the sixth aspect, the transceiver unit is further configured to: send, to a network device, request information used to request the first time-frequency resource; and receive configuration information of the first time-frequency resource from the network device.

In a possible implementation of the sixth aspect, the processing unit is specifically configured to determine the first time-frequency resource in a sidelink resource set, where a time-frequency resource in the sidelink resource set is used to transmit sidelink information.

According to a seventh aspect, a communication apparatus is provided. The apparatus includes: a processing unit, configured to obtain a first time-frequency resource, where the first time-frequency resource is used to receive sidelink control information and data; and a transceiver unit, configured to receive, on the first time-frequency resource, a sidelink reference signal, the sidelink control information, and the data from a first terminal device, where the sidelink reference signal is used to determine a channel status of a sidelink between the first terminal device and a second terminal device; and the communication apparatus is the second terminal device, or the second terminal device includes the communication apparatus.

In a possible implementation of the seventh aspect, the sidelink control information is used to indicate configuration information of the sidelink reference signal.

In a possible implementation of the seventh aspect, the transceiver unit is specifically configured to receive the sidelink reference signal from the first terminal device on the last one or more symbols of the first time-frequency resource.

In a possible implementation of the seventh aspect, the transceiver unit is specifically configured to receive the sidelink reference signal from the first terminal device on any one or more symbols of the first time-frequency resource.

In a possible implementation of the seventh aspect, a frequency domain bandwidth of the sidelink reference signal is the same as a bandwidth of the first time-frequency resource, or a bandwidth of the sidelink reference signal is the same as a bandwidth of the data.

In a possible implementation of the seventh aspect, the control information includes the configuration information of the sidelink reference signal, or the control information includes indication information of the configuration information of the sidelink reference signal; and the indication information is a resource index of the sidelink reference signal, and the resource index of the sidelink reference signal corresponds to the configuration information of the sidelink reference signal.

According to an eighth aspect, a communication apparatus is provided. The apparatus includes: a processing unit, configured to obtain a second time-frequency resource, where the second time-frequency resource is used to send a sidelink reference signal; and a transceiver unit, configured to send, on the second time-frequency resource, the sidelink reference signal and indication information to a second terminal device, where the indication information is used to indicate configuration information of the reference signal, and the sidelink reference signal is used to determine a channel status of a sidelink between a first terminal device and the second terminal device; and the communication apparatus is the first terminal device, or the first terminal device includes the communication apparatus.

In a possible implementation of the eighth aspect, the indication information is the configuration information of the sidelink reference signal, or the indication information is indication information of the configuration information of the sidelink reference signal.

In a possible implementation of the eighth aspect, the transceiver unit is further configured to: send, to a network device, request information used to request the second time-frequency resource; and receive configuration information of the second time-frequency resource from the network device.

In a possible implementation of the eighth aspect, the processing unit is specifically configured to determine the second time-frequency resource in a sidelink resource set, where a time-frequency resource in the sidelink resource set is used to transmit sidelink information.

According to a ninth aspect, a communication apparatus is provided. The apparatus includes: a processing unit, configured to obtain a second time-frequency resource, where the second time-frequency resource is used to receive a sidelink reference signal; and a transceiver unit, configured to receive, on the second time-frequency resource, the sidelink reference signal and indication information from a first terminal device, where the indication information is used to indicate configuration information of the reference signal, and the sidelink reference signal is used to determine a channel status of a sidelink between the first terminal device and a second terminal device; and the communication apparatus is the second terminal device, or the second terminal device includes the communication apparatus.

In a possible implementation of the ninth aspect, the indication information is the configuration information of the sidelink reference signal, or the indication information is indication information of the configuration information of the sidelink reference signal.

In a possible implementation of the ninth aspect, the transceiver unit is further configured to receive configuration information of the second time-frequency resource from a network device or the first terminal device.

According to a tenth aspect, a communication apparatus is provided. The apparatus includes: a processing unit, configured to determine a second time-frequency resource, where the second time-frequency resource is used to send a sidelink reference signal, and the sidelink reference signal is used to determine a channel status of a sidelink between a first terminal device and a second terminal device; and a transceiver unit, configured to send configuration information of the second time-frequency resource to the first terminal device and/or the second terminal device.

In a possible implementation of the tenth aspect, the processing unit is specifically configured to: determine a sidelink resource set, where a time-frequency resource in the sidelink resource set is used to transmit sidelink information; and determine the second time-frequency resource in the sidelink resource set.

In a possible implementation of the tenth aspect, the transceiver unit is further configured to receive, from the first terminal device and/or the second terminal device, request information for the second time-frequency resource.

According to an eleventh aspect, a communication apparatus is provided. The apparatus includes at least one processor and a memory, and the at least one processor is configured to perform the method in any one of the first aspect to the fourth aspect or the possible implementations of the first aspect to the fourth aspect.

According to a twelfth aspect, a communication apparatus is provided. The apparatus includes at least one processor and a memory, and the at least one processor is configured to perform the method in any one of the fifth aspect or the possible implementations of the fifth aspect.

According to a thirteenth aspect, a terminal device is provided. The terminal device includes the communication apparatus provided in any one of the sixth aspect to the ninth aspect or the possible implementations of the sixth aspect to the ninth aspect, or the terminal device includes the communication apparatus provided in the eleventh aspect.

According to a fourteenth aspect, a network device is provided. The network device includes the communication apparatus provided in any one of the tenth aspect or the possible implementations of the tenth aspect, or the network device includes the communication apparatus provided in the twelfth aspect.

According to a fifteenth aspect, a computer program product is provided. The computer program product includes a computer program. When the computer program is executed by a processor, the computer program is configured to perform the method in any one of the first aspect to the fifth aspect or the possible implementations of the first aspect to the fifth aspect.

According to a sixteenth aspect, a computer-readable storage medium is provided. The computer-readable storage medium stores a computer program. When the computer program is executed, the computer program is configured to perform the method in any one of the first aspect to the fifth aspect or the possible implementations of the first aspect to the fifth aspect.

According to a seventeenth aspect, a chip system is provided. The chip system includes a processor, configured to implement the function in each of the foregoing aspects, for example, generate, receive, send, or process the data and/or the information in the foregoing methods. In a possible design, the chip system further includes a memory. The memory is configured to store necessary program instructions and necessary data. The chip system may include a chip, or may include a chip and another discrete component. The processor and the memory may be decoupled, separately disposed on different devices, and connected in a wired or wireless manner; or the processor and the memory may be coupled on a same device. Optionally, the communication apparatus provided in any one of the foregoing aspects includes the chip system.

### BRIEF DESCRIPTION OF DRAWINGS

FIG. 1 is a schematic architectural diagram of a mobile communication system to which an embodiment of this application is applicable;
FIG. 2 is a schematic diagram of indicating, by using a bit map, a subframe used for V2V communication;
FIG. 3 is an example of a schematic diagram of a time-frequency resource of a V2V communication resource pool;
FIG. 4 is a schematic diagram in which a PSCCH and a PSSCH are frequency division multiplexed;
FIG. 5 is a schematic diagram in which a PSCCH and a PSSCH are partially frequency division multiplexed and partially time division multiplexed;
FIG. 6 is a schematic diagram of a CSI-RS resource;
FIG. 7 is a schematic diagram of a communication system to which a communication method according to an embodiment of this application is applicable;
FIG. 8 is another example of a schematic diagram of a communication system to which a communication method according to an embodiment of this application is applicable;
FIG. 9 is an example of a schematic interaction diagram of a sidelink reference signal transmission method according to an embodiment of this application;
FIG. 10 is a schematic diagram of a sidelink reference signal carried on a first time-frequency resource according to some embodiments of this application;
FIG. 11 is a schematic diagram of a sidelink reference signal carried on a first time-frequency resource according to some embodiments of this application;
FIG. 12 is a schematic diagram of a sidelink reference signal carried on a first time-frequency resource according to some embodiments of this application;
FIG. 13 is a schematic diagram of a sidelink reference signal carried on a first time-frequency resource according to some embodiments of this application;
FIG. 14 is a schematic diagram of a sidelink reference signal carried on a first time-frequency resource according to some embodiments of this application;
FIG. 15 is another example of a schematic interaction diagram of a sidelink reference signal transmission method according to an embodiment of this application;
FIG. 16 is another example of a schematic interaction diagram of a sidelink reference signal transmission method according to an embodiment of this application;
FIG. 17 is another example of a schematic interaction diagram of a sidelink reference signal transmission method according to an embodiment of this application;
FIG. 18 is another example of a schematic interaction diagram of a sidelink reference signal transmission method according to an embodiment of this application;
FIG. 19 is another example of a schematic interaction diagram of a sidelink reference signal transmission method according to an embodiment of this application;
FIG. 20 is a schematic block diagram of a communication apparatus according to an embodiment of this application;
FIG. 21 is a schematic block diagram of a communication apparatus according to another embodiment of this application;
FIG. 22 is a schematic block diagram of a communication apparatus according to an embodiment of this application;
FIG. 23 is a schematic block diagram of a communication apparatus according to another embodiment of this application;
FIG. 24 is a schematic block diagram of a communication apparatus according to another embodiment of this application;
FIG. 25 is a schematic block diagram of a communication apparatus according to an embodiment of this application;
FIG. 26 is a schematic block diagram of a communication apparatus according to an embodiment of this application;
FIG. 27 is a schematic block diagram of a communication apparatus according to another embodiment of this application;
FIG. 28 is a schematic block diagram of a communication apparatus according to another embodiment of this application;
FIG. 29 is a schematic block diagram of a communication apparatus according to an embodiment of this application;
FIG. 30 is a schematic block diagram of a terminal device according to an embodiment of this application;
   and
FIG. 31 is a schematic block diagram of a network device according to another embodiment of this application.

### DESCRIPTION OF EMBODIMENTS

The following describes technical solutions in this application with reference to accompanying drawings.

The technical solutions in the embodiments of this application can be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system.

A terminal device in the embodiments of this application may be user equipment, an access terminal, a subscriber unit, a subscriber station, a mobile station, a mobile station, a remote station, a remote terminal, a mobile device, a user terminal, a terminal, a wireless communication device, a user agent, a user apparatus, a vehicle, a vehicle-mounted device, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a future 5G network, or a terminal device in a future evolved public land mobile network (public land mobile network, PLMN). This is not limited in the embodiments of this application.

A network device in the embodiments of this application may be a device that is deployed in a radio access network and that is configured to provide a wireless communication service to a terminal device. The network device may be a base transceiver station (base transceiver station, BTS) in a global system for mobile communications (global system for mobile communications, GSM) system or a code division multiple access (code division multiple access, CDMA) system, a NodeB (NodeB, NB) in a wideband code division multiple access (wideband code division multiple access, WCDMA) system, an evolved NodeB (evolved NodeB, eNB or eNodeB) in an LTE system, or a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like. This is not limited in the embodiments of this application.

In the embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more computer operating systems, for example, a Linux operating system, a Unix operating system, an Android operating system, an iOS operating system, and a Windows operating system, that implement service processing by using a process (process). The application layer includes applications such as a browser, an address book, word processing software, and instant communication software. In addition, a specific structure of an execution body of a method provided in the embodiments of this application is not specifically limited in the embodiments of this application, provided that a program that records code of the method provided in the embodiments of this application can be run to perform communication according to the method provided in the embodiments of this application. For example, the method provided in the embodiments of this application may be performed by the terminal device or the network device, or a function module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), and a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable medium" may include but is not limited to a radio channel, and various other media that can store, contain, and/or carry instructions and/or data.

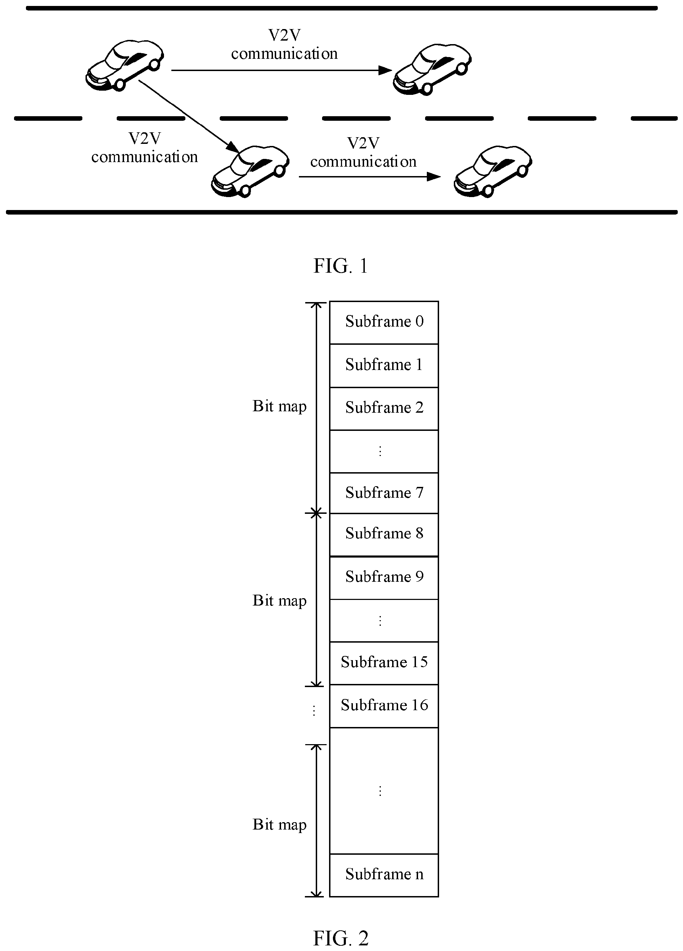

Vehicle-to-everything (vehicle to everything, V2X) communication is an important key technology for implementing environment perception and information exchange in an internet of vehicles. Everything herein may be another vehicle, another infrastructure, a pedestrian, a terminal device, or the like. V2X communication may be considered as a special case of device-to-device (device to device, D2D) communication. Vehicle-to-vehicle (vehicle to vehicle, V2V) communication may be considered as a special case of V2X communication. Through direct communication between vehicles, status information and road conditions of other vehicles can be obtained in real time, so that vehicle driving can be better assisted and even self-driving can be implemented. A V2V communication link may be referred to as a sidelink (side link, SL), and the sidelink is a direct communication link between terminal devices. For example, the sidelink may be used for vehicle-to-vehicle communication. A direct link may be understood as a link on which data transmission is directly performed between two terminal devices, and there is no other network node between the two terminal devices. FIG. 1 is a schematic diagram of a typical scenario of V2V communication. As shown in FIG. 1, a moving vehicle may directly exchange information with another nearby vehicle through V2V communication.

Currently, V2V communication includes two communication modes. A first communication mode is V2V communication based on scheduling performed by a network device (for example, a base station), and a V2V user (for example, the V2V user may be a vehicle or a vehicle-mounted device) sends a control message and data for V2V communication on a scheduled time-frequency resource based on scheduling information of the network device. In a second communication mode, a V2V user selects a time-frequency resource used for V2V communication from available time-frequency resources included in a preconfigured V2V communication resource pool (which may also be referred to as a V2X resource set), and sends a control message and data on the selected resource. The two communication modes have advantages and disadvantages, and can be flexibly applied to various scenarios.

The time-frequency resource for V2V communication is configured based on the V2V communication resource pool. The V2V communication resource pool may be considered as a set including a time domain resource and a frequency domain resource used for V2V communication. For example, for a time domain resource, the network device may use a bit map (bit map) and periodically repeat the bit map to indicate a set of subframes that are in all subframes in a system and that can be used for V2V communication. A time length of one subframe is 1 ms. FIG. 2 is a schematic diagram of indicating, by using a bit map, a subframe used for V2V communication. For example, a bit "1" may be used to indicate that a subframe is used for V2V communication, and a bit "0" may be used to indicate that a subframe is not used for V2V communication. A length of the bit map in the example shown in FIG. 2 is eight bits.

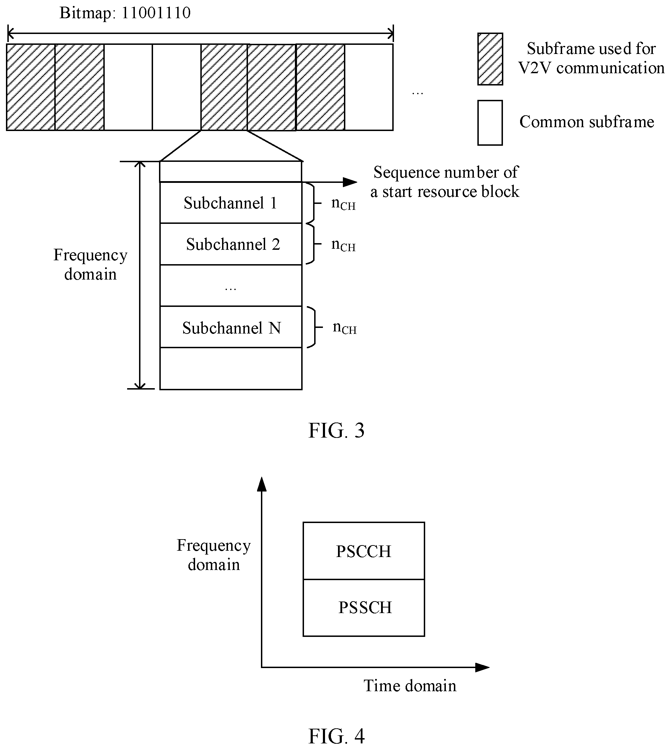

For a frequency domain resource in a V2V communication resource pool, a network device may divide a frequency band used for V2V communication into several subchannels, and each subchannel includes a specific quantity of resource blocks (resource block, RB). FIG. 3 is an example of a schematic diagram of a time-frequency resource of a V2V communication resource pool. As shown in FIG. 3, a bit" 1" is used to indicate that a subframe can be used for V2V communication, and a bit "0" is used to indicate that a subframe is not used for V2V communication. In addition, a network device indicates a sequence number of the first resource block of a frequency domain resource used for V2V communication, a total quantity N of subchannels included in the V2V communication resource pool, and a quantity n_{CH} of resource blocks included in each subchannel. During V2V communication, one time of data or control information transmission may occupy one or more subchannels. It should be understood that the subframe in the foregoing descriptions is a time unit defined in a communication system (for example, LTE), and a time length of one subframe is 1 ms.

In a V2X communication system, a physical sidelink control channel (physical sidelink control channel, PSCCH) is used to transmit control information during V2V communication, and a physical sidelink shared channel (physical sidelink shared channel, PSSCH) is used to transmit data during V2V communication. The foregoing control information is used by a receive end to receive the data during V2V communication. Currently, the PSCCH and the PSSCH may be multiplexed in a frequency division multiplexing (frequency division multiplexing, FDM) manner. FIG. 4 is a schematic diagram in which a PSCCH and a PSSCH are frequency division multiplexed. As shown in FIG. 4, the PSCCH and the PSSCH occupy a same time domain resource, and occupy unused subcarriers in frequency domain.

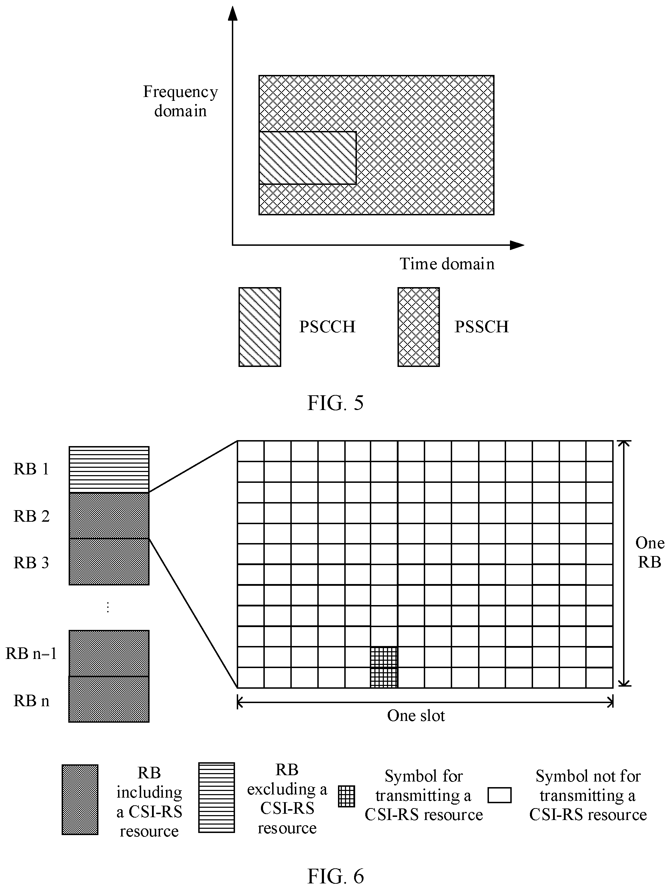

In another possible implementation, the PSCCH and the PSSCH may be partially time division multiplexed and partially frequency division multiplexed. FIG. 5 is a schematic diagram in which a PSCCH and a PSSCH are partially frequency division multiplexed and partially time division multiplexed. As shown in FIG. 5, a part of the PSSCH and a part of the PSCCH occupy a same time domain resource and occupy different subcarriers in frequency domain, and a remaining part of the PSSCH and a remaining part of the PSCCH occupy different time domain resources in time domain.

Channel state information (Channel State Information, CSI) is channel state information reported by a receive end device (for example, a terminal device) to a transmit end device (for example, a network device), and includes one or more of a channel quality indicator (channel quality indicator, CQI), a precoding matrix indicator (precoding matrix indicator, PMI), a precoding type indicator (precoding type indicator, PTI), and a channel matrix rank indication (rank indication, RI). The network device determines channel quality based on the CSI information. When performing downlink scheduling, the network device considers the channel quality. To be specific, the network device determines, based on the CSI information, a transmission resource, a transmission parameter, and the like for control information and data that are to be sent to the terminal device.

A channel state information reference signal (channel state information reference signal, CSI-RS) is mainly used to obtain channel state information. A network device periodically sends the CSI-RS to a terminal device. The terminal device receives the CSI-RS, performs measurement to obtain channel state information, and then feeds back the channel state information to the network device. The CSI-RS may occupy a plurality of resource blocks (resource block, RB) in frequency domain. One RB includes 12 resource elements (resource element, RE). One RE occupies one symbol in time domain, and occupies one subcarrier in frequency domain. The CSI-RS may occupy one or more symbols in time domain. The CSI-RS may support a plurality of antenna ports (for example, in an NR system, the CSI-RS supports a maximum of 32 ports), and different code division multiplexing manners may be used between different antenna ports. Specifically, CSI-RS resource configuration information may include the following parameters: a periodicity of the CSI-RS, a bandwidth occupied by the CSI-RS, a quantity of antenna ports supported by the CSI-RS, a CSI-RS sending density, a CSI-RS code division multiplexing manner, a CSI-RS resource mapping mode (which is a mapping manner in one RB and one slot and includes a quantity of occupied symbols, an index of the symbol, an index of an occupied RE, and the like), a CSI-RS scrambling identity (scrambling ID), and the like. FIG. 6 is a schematic diagram of a CSI-RS resource. It should be understood that in 5G or another future communication system, a slot may be a flexibly defined time unit, and a slot length varies with a subcarrier spacing. Generally, as the subcarrier spacing increases, the slot length decreases. Generally, one slot includes 14 time domain symbols. In some cases (for example, in a case of an extended cyclic prefix (cyclic prefix, CP)), one slot may include 12 time domain symbols.

As shown in FIG. 6, a total channel bandwidth is n RBs, a bandwidth of a CSI-RS is n-1 RBs (that is, from an RB 2 to an RB n), and the CSI-RS includes two antenna ports. Specifically, in a time-frequency resource within a range of one RB and one slot, the CSI-RS occupies one symbol in time domain (where 14 symbols of one slot (slot) are numbered from 0, and the CSI-RS occupies the fifth OFDM symbol) and has a density of 1 (where the density is a quantity of REs occupied by each antenna port of a CSI-RS resource in one RB and one slot). In the embodiments of this application, the symbol is also referred to as a time domain symbol, and may be an orthogonal frequency division multiplexing (orthogonal frequency division multiplexing, OFDM) symbol, or may be a single carrier frequency division multiple access (single carrier frequency division multiple access, SC-FDMA) symbol. SC-FDMA is also referred to as orthogonal frequency division multiplexing with transform precoding (orthogonal frequency division multiplexing with transform precoding, OFDM with TP).

A network device configures one or more CSI-RS resources for each terminal device by using radio resource control (radio resource control, RRC) signaling. The one or more CSI-RS resources may be periodic or aperiodic. The network device further sends a CSI-RS to each terminal device. The terminal device receives, based on CSI-RS resource configuration information of the network device, the CSI-RS sent by the network device, and performs channel measurement.

Currently, the network device configures the CSI-RS resource for each terminal device by using RRC signaling, and the network device sends the CSI-RS to the terminal device on a downlink. The CSI-RS is configured and sent by the network device.

In V2X or D2D communication, a communication link (a direct link) is a communication link between terminal devices. In V2X or D2D communication, a reference signal sent on a sidelink may be referred to as a sidelink reference signal, and the sidelink reference signal is used to determine a channel status of the sidelink between terminal devices. For example, a CSI-RS sent by one terminal device in V2X or D2D communication may be referred to as a sidelink reference signal, and the CSI-RS is sent by the terminal device to another terminal device. In addition, in V2X or D2D communication, there may be a plurality of parallel sidelinks (for example, V2X communication links), and a transmit end device on each V2X communication link may send a CSI-RS to a receive end device on the V2X communication link. In this case, if a network device configures a CSI-RS resource for each terminal device, and sends a CSI-RS to each terminal device, a problem of low efficiency is caused. For example, the network device cannot learn of a status of each V2X communication link in real time, cannot flexibly allocate a CSI-RS resource to each V2X communication link based on the status of the V2X communication link. In this case, a conflict may occur between CSI-RS resources for different V2X communication links. However, when the terminal device is located outside coverage of the network device, the network device cannot configure any CSI-RS resource for the transmit end device, and correct CSI-RS sending cannot be ensured. Consequently, communication quality and efficiency are severely affected.

Based on the foregoing problem, this application provides a sidelink reference signal transmission method, so that a sidelink reference signal can be flexibly and accurately sent on a sidelink. When a plurality of sidelinks with different transmit end devices coexist, efficiency of sending a sidelink reference signal is improved, resource overheads of the sidelink reference signal are reduced, and flexibility and reliability of sending the sidelink reference signal on the sidelink are improved, thereby improving efficiency and reliability of data transmission on the sidelink, and improving user experience.

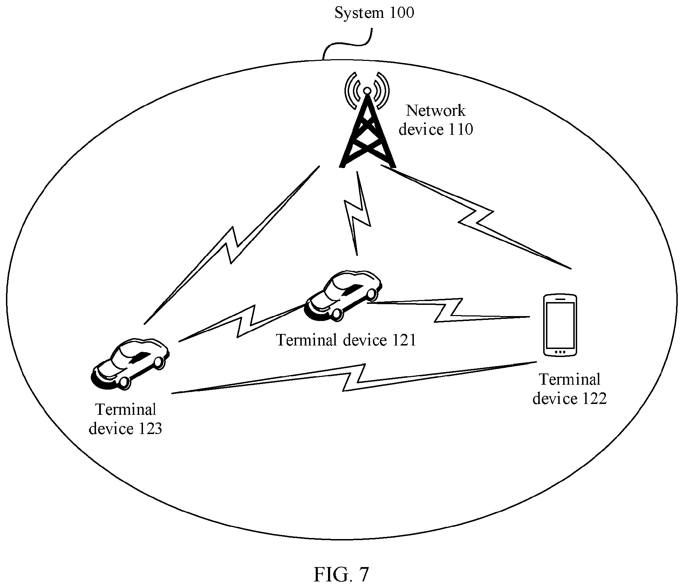

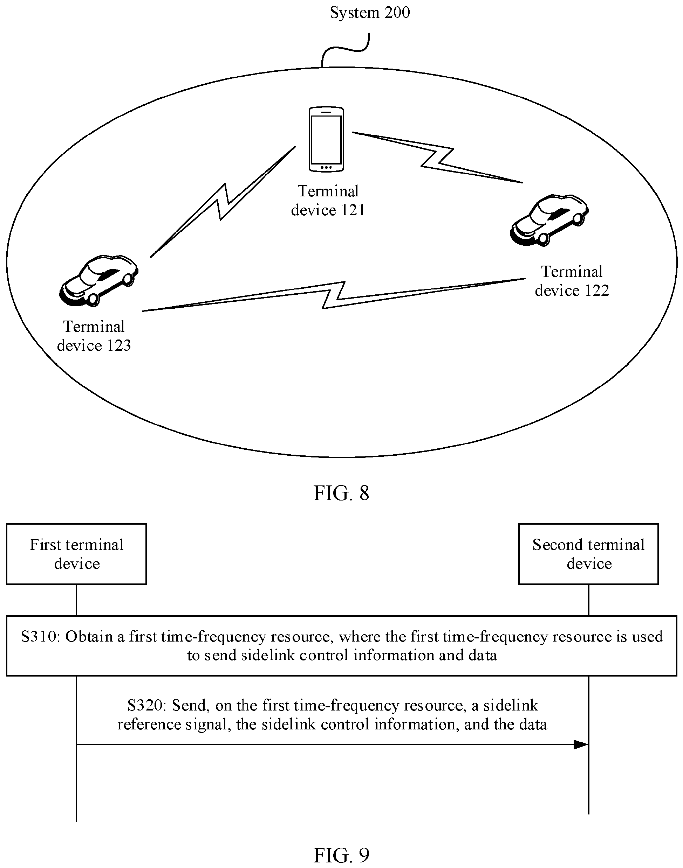

For ease of understanding the embodiments of this application, a communication system to which the embodiments of this application are applicable is first briefly described with reference to FIG. 7 and FIG. 8.

FIG. 7 is a schematic diagram of a communication system 100 to which a communication method according to an embodiment of this application is applicable. As shown in FIG. 7, the communication system 100 includes four communication devices, for example, a network device 110 and terminal devices 121 to 123. Data communication between the terminal devices may be performed in a D2D or V2X communication manner. Data communication between the network device 110 and at least one of the terminal devices 121 to 123 may be performed. For the terminal devices 121 to 123, a direct link formed between every two of the terminal devices 121 to 123 is an SL. For example, when transmitting a sidelink reference signal, the terminal devices 121 and 123 may transmit the sidelink reference signal and measure sidelink channel quality by using the sidelink reference signal transmission method in the embodiments of this application.

FIG. 8 is a schematic diagram of a communication system 200 to which a communication method according to an embodiment of this application is applicable. As shown in FIG. 8, the communication system 200 includes three communication devices, for example, terminal devices 121 to 123. Data communication may be performed between the terminal devices in a D2D or V2X communication manner. For the terminal devices 121 to 123, a link between every two of the terminal devices 121 to 123 is an SL. For example, when transmitting a sidelink reference signal, the terminal devices 123 and 122 may transmit the sidelink reference signal and measure sidelink channel quality by using the sidelink reference signal transmission method in the embodiments of this application.

It should be understood that the communication systems shown in FIG. 7 and FIG. 8 may further include more network nodes, for example, a terminal device or a network device. The network device or the terminal device included in the communication systems shown in FIG. 7 and FIG. 8 may be the network devices or the terminal devices in the foregoing various forms. The embodiments of this application are not shown one by one in the figures.

The following describes in detail the sidelink reference signal transmission method provided in this application with reference to FIG. 9. FIG. 9 is a schematic interaction diagram of a sidelink reference signal transmission method 300 according to an embodiment of this application. The method 300 may be applied to the scenarios shown in FIG. 1, FIG. 7, and FIG. 8. Certainly, the method may further be applied to another communication scenario. This is not limited in the embodiments of this application.

It should be understood that, in the embodiments of this application, an example in which the method in the embodiments is performed by a terminal device and a network device is used to describe the method in the embodiments. By way of example, and not limitation, the method may alternatively be performed by a chip used in a terminal device and a chip used in a base station. For example, when the method 300 is applied to a V2X communication system, the terminal device may be a vehicle, a vehicle-mounted device, a mobile phone terminal, or the like in V2X communication.

According to the sidelink reference signal transmission method provided in this application, a sidelink reference signal is carried on a time-frequency resource used to send sidelink control information and data for sending, to improve flexibility and reliability of sending the sidelink reference signal on a sidelink, and reduce resource overheads of the sidelink reference signal.

As shown in FIG. 9, the method 300 shown in FIG. 9 may include steps S310 and S320. The following describes the steps in the method 300 in detail with reference to FIG. 9.

S310: A first terminal device and a second terminal device obtain a first time-frequency resource, where the first time-frequency resource is used to send sidelink control information and data.

S320: The first terminal device sends, on the first time-frequency resource, a sidelink reference signal, the sidelink control information, and the data to the second terminal device. Correspondingly, the second terminal device receives, on the first time-frequency resource, the reference signal, the control information, and the data from the first terminal device. The sidelink reference signal is used to determine a channel status of a sidelink between the first terminal device and the second terminal device.

Specifically, when the first terminal device needs to send the data to the second terminal device, the first terminal device needs to learn of the channel status of a direct link (the sidelink) between the first terminal device and the second terminal device. Therefore, the first terminal device needs to send, to the second terminal device, the sidelink reference signal used to determine the channel status of the sidelink, where the sidelink is a direct link between the first terminal device and the second terminal device, and the sidelink reference signal is a reference signal sent on the sidelink. The sidelink reference signal is used by the second terminal device to determine the channel status of the sidelink between the first terminal device and the second terminal device. If the first terminal device needs to send the sidelink reference signal to the second terminal device, the first terminal device needs to determine one or more time-frequency resources on which the sidelink reference signal can be sent, that is, needs to determine the time-frequency resource for sending the sidelink reference signal. Therefore, in step S310, the first terminal device may obtain (determine) the first time-frequency resource, where the first time-frequency resource is used to send the sidelink control information and the data. In other words, the first time-frequency resource is a time-frequency resource used by the first terminal device to send the control information and/or the data of the sidelink to the second terminal device. The sidelink control information may be control information carried on a PSCCH of the sidelink, and the sidelink data may be data carried on a PSSCH of the sidelink. The sidelink control information may include related control information used to demodulate and schedule the sidelink data. For example, the sidelink control information may include information about the time-frequency resource occupied by the sidelink data, a power parameter for sending the sidelink data, and a coding matrix of the sidelink data. The sidelink control information is mainly used by a receive end device to correctly receive the sidelink data sent by the transmit end device. In the following descriptions, the sidelink control information is represented by the PSCCH, and the sidelink data is represented by the PSSCH. Unless otherwise specified, the sidelink control information and the PSCCH may be interchanged, and the sidelink data and the PSSCH may be interchanged.

The first time-frequency resource may be a time-frequency resource used to send the PSCCH. Alternatively, the first time-frequency resource may be a time-frequency resource used to send the PSSCH. Alternatively, the first time-frequency resource may be a time-frequency resource used to send the PSCCH and the PSSCH. The PSCCH and the PSSCH may be frequency division multiplexed on the first time-frequency resource, for example, as shown in FIG. 4. Alternatively, the PSCCH and the PSSCH may be partially frequency division multiplexed and partially time division multiplexed, for example, as shown in FIG. 5. This is not limited in the embodiments of this application. The first time-frequency resource has a determined time domain range and a determined frequency domain range. In S310, the first terminal device obtains the first time-frequency resource. Specifically, the first terminal device may obtain (determine) a time domain start position and a frequency domain start position of the first time-frequency resource, a size of the first time-frequency resource in time domain and a size of the first time-frequency resource in frequency domain, or time domain start and end positions of the first time-frequency resource and frequency domain start and end positions of the first time-frequency resource.

The second terminal device may also obtain the first time-frequency resource. After obtaining the first time-frequency resource, the second terminal device may correctly receive, on the first time-frequency resource, the PSCCH and/or the PSSCH sent by the first terminal device. Specifically, the second terminal device may receive, in a blind detection manner, the PSCCH sent by the first terminal device, and then receive, based on indication information on the PSCCH, the PSSCH sent by the first terminal device. For example, the indication information on the PSCCH may be indication information used to indicate a position of the time-frequency resource occupied by the PSCCH and a coding scheme of the PSCCH.

Optionally, in some embodiments of this application, after obtaining the first time-frequency resource, the first terminal device may notify the second terminal device of configuration information of the first time-frequency resource. That is, the second terminal device may obtain the first time-frequency resource from the first terminal device.

Optionally, in some embodiments of this application, the second terminal device may request the configuration information of the first time-frequency resource from a network device, and the network device may notify the second terminal device of the configuration information of the first time-frequency resource. That is, the second terminal device may obtain the first time-frequency resource from the network device. The first terminal device may not need to notify the second terminal device of the configuration information of the first time-frequency resource. Specifically, the second terminal device blindly detects downlink control information (downlink control information DCI) carried on a physical downlink control channel (physical down control channel, PDCCH) sent by the network device, and learns of the configuration information of the first time-frequency resource by using the detected DCI.

In S320, the first terminal device sends, on the first time-frequency resource, the sidelink reference signal, the sidelink control information, and the data to the second terminal device, where the sidelink reference signal is used to determine the channel status of the sidelink. Correspondingly, the second terminal device receives the sidelink reference signal.

Specifically, after the first terminal device obtains the first time-frequency resource, in S320, the first terminal device may send, on the first time-frequency resource, the sidelink reference signal, the sidelink control information, and the data to the second terminal device.

Optionally, in some embodiments of this application, the first terminal device may send only the PSCCH and the sidelink reference signal on the first time-frequency resource.

Optionally, in some embodiments of this application, the first terminal device may send only the PSSCH and the sidelink reference signal on the first time-frequency resource.

After receiving the sidelink reference signal, the second terminal device may determine the channel status of the sidelink between the first terminal device and the second terminal device based on the sidelink reference signal, further generate CSI of the sidelink, and further feed back the CSI of the sidelink to the first terminal device, and the first terminal device may determine or adjust, based on the CSI of the sidelink, a sending parameter, a resource, or the like used for sending the data to the second terminal device, thereby improving reliability of data transmission between the first terminal device and the second terminal device.

According to the sidelink reference signal transmission method provided in this application, the sidelink reference signal is carried on the time-frequency resource used to send the sidelink control information and/or the data, and is sent together with the sidelink control information and/or the data. The sidelink reference signal can be flexibly and accurately sent in SL communication. No additional sending resource needs to be configured for the sidelink reference signal, thereby improving flexibility and reliability of sending the sidelink reference signal on the sidelink, and reducing resource overheads of the sidelink reference signal.

In this embodiment of this application, the sidelink reference signal may include a cell-specific reference signal, a CSI-RS, and another reference signal used to measure channel quality of the sidelink. A specific type of the reference signal is not limited in this embodiment of this application.

Optionally, in some embodiments of this application, the sidelink control information is further used to indicate configuration information of the sidelink reference signal.

Specifically, the first terminal device sends, on the first time-frequency resource, the sidelink reference signal, the sidelink control information, and the data to the second terminal device. Therefore, the first terminal device further needs to notify the second terminal device of the configuration information of the sidelink reference signal. The configuration information of the sidelink reference signal is used by the second terminal device to correctly receive the sidelink reference signal. For example, the second terminal device may determine, based on the configuration information of the sidelink reference signal, REs that are of the first time-frequency resource and that are used to detect the sidelink reference signal and how to detect the sidelink reference signal. Therefore, the PSCCH may be used to indicate the configuration information of the sidelink reference signal, that is, the configuration information of the sidelink reference signal may be carried on the PSCCH.

Optionally, in some embodiments of this application, the configuration information of the sidelink reference signal includes one or more of the following information:
a bandwidth of the sidelink reference signal, a quantity of antenna ports of the sidelink reference signal, a quantity of symbols occupied by the sidelink reference signal, a density of the sidelink reference signal, a code division multiplexing manner of the sidelink reference signal, a resource mapping mode of the sidelink reference signal, and a scrambling identity of the sidelink reference signal.

The density of the sidelink reference signal is a quantity of REs, in one RB and one slot (slot), occupied by each transmit antenna port used to send the sidelink reference signal. The bandwidth of the sidelink reference signal may be a size of a frequency domain resource occupied by the sidelink reference signal. The quantity of antenna ports of the sidelink reference signal may be a quantity of antenna ports for sending the sidelink reference signal. The resource mapping mode of the sidelink reference signal may be a mapping mode in one RB and one slot. For example, the mapping mode includes a quantity of occupied symbols, an index of the symbol, and an index of an occupied RE. The second terminal device may determine sending information of the sidelink reference signal based on the configuration information of the sidelink reference signal, to accurately receive the sidelink reference signal.

It should be understood that, in this embodiment of this application, the configuration information of the sidelink reference signal may further include another configuration parameter related to the sidelink reference signal. For example, the configuration information of the sidelink reference signal may further include a periodicity of the sidelink reference signal. This is not limited in the embodiments of this application.

The PSCCH is used to indicate the configuration information of the sidelink reference signal, so that the second terminal device can accurately receive the sidelink reference signal, thereby improving a success rate of receiving the sidelink reference signal by the second terminal device, and ensuring transmission efficiency of the sidelink reference signal.

Optionally, the PSSCH may alternatively be used to indicate the configuration information of the sidelink reference signal, that is, the configuration information of the sidelink reference signal may be carried on the PSSCH, or indication information of the configuration information of the sidelink reference signal may be carried on the PSSCH.

Optionally, in some embodiments of this application, the PSCCH includes the configuration information of the sidelink reference signal, or the PSCCH includes indication information of the configuration information of the sidelink reference signal.

Specifically, the first terminal device may send the configuration information of the sidelink reference signal to the second terminal device through the PSCCH or the PSSCH.

Optionally, in some other embodiments of this application, the first terminal device may alternatively send the indication information of the configuration information of the sidelink reference signal to the second terminal device through the PSCCH or the PSSCH.

In a specific implementation, the indication information of the configuration information of the sidelink reference signal may be a resource index (resource index) of the sidelink reference signal, and the resource index of the sidelink reference signal corresponds to the configuration information of the sidelink reference signal.

Specifically, one or more sidelink reference signals may be preconfigured or predefined for the first terminal device and the second terminal device, and an identifier is configured or predefined for configuration information of each sidelink reference signal. The identifier of each sidelink reference signal may be considered as a resource index of the sidelink reference signal, where the resource index of the sidelink reference signal is used to identify the configuration information of the sidelink reference signal, or the resource index of the sidelink reference signal is used to indicate the configuration information of the sidelink reference signal.

For example, a resource index i of a sidelink reference signal and a resource index j (i≠j) of a sidelink reference signal respectively indicate different configuration information of the sidelink reference signals. The resource index i of the sidelink reference signal may be considered as a resource identifier of the sidelink reference signal. After obtaining the resource index (resource index) of the sidelink reference signal, the second terminal device may determine, based on the resource index of the sidelink reference signal, the configuration information that is of the sidelink reference signal and that is indicated by the resource index of the sidelink reference signal, so that the second terminal device receives the sidelink reference signal on the first time-frequency resource based on the configuration information of the sidelink reference signal.

It should be understood that a specific form of the indication information of the configuration information of the sidelink reference signal is not limited in the embodiments of this application, provided that the indication information can uniquely identify the configuration information of the sidelink reference signal. This is not limited in the embodiments of this application.

Optionally, in some embodiments of this application, the sidelink reference signal is located on the last one or more symbols of the first time-frequency resource in time domain. That is, in step S320, the first terminal device sends the sidelink reference signal to the second terminal device on the last one or more symbols of the first time-frequency resource. The second terminal device receives the sidelink reference signal on the last one or more symbols of the first time-frequency resource.

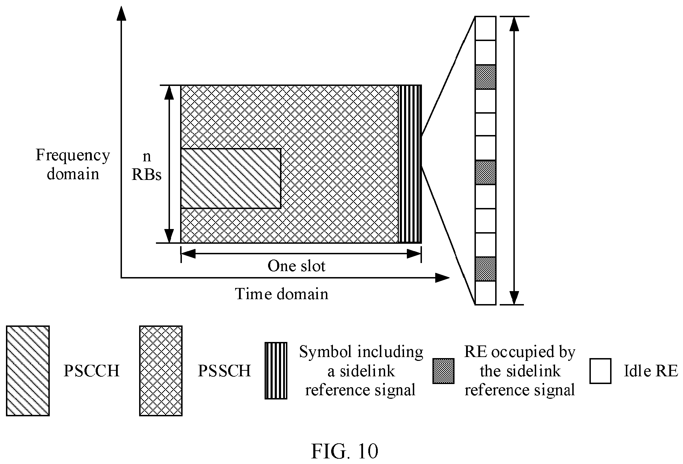

FIG. 10 is a schematic diagram of the sidelink reference signal carried on the first time-frequency resource according to some embodiments of this application. As shown in FIG. 10, the first time-frequency resource is one slot in time domain, and occupies n RBs in frequency domain. The PSCCH and the PSSCH are partially frequency division multiplexed and partially time division multiplexed. The sidelink reference signal may be located on the last one or more symbols of the first time-frequency resource. If the slot includes a guard interval, the sidelink reference signal may occupy the last one or more symbols obtained after the guard interval is removed from the first time-frequency resource. As shown FIG. 10, the sidelink reference signal may be located on the last symbol of the slot. The first terminal device sends the sidelink reference signal to the second terminal device on the last one or more symbols of the first time-frequency resource. Interference caused by the sidelink reference signal to the PSCCH or the PSSCH can be reduced, and accuracy of receiving the sidelink reference signal, the PSCCH, and/or the PSSCH can be improved.

As shown in FIG. 10, the sidelink reference signal occupies the last symbol of the slot in time domain, and may occupy n RBs or only some of the n RBs in frequency domain. For one RB, the sidelink reference signal may be sent only on some REs of the RB, or may be sent on all the REs included in the RB. As shown in FIG. 10, the sidelink reference signal is sent on some REs in one RB, that is, remaining REs in the RB are idle and are not used to send any information or data.

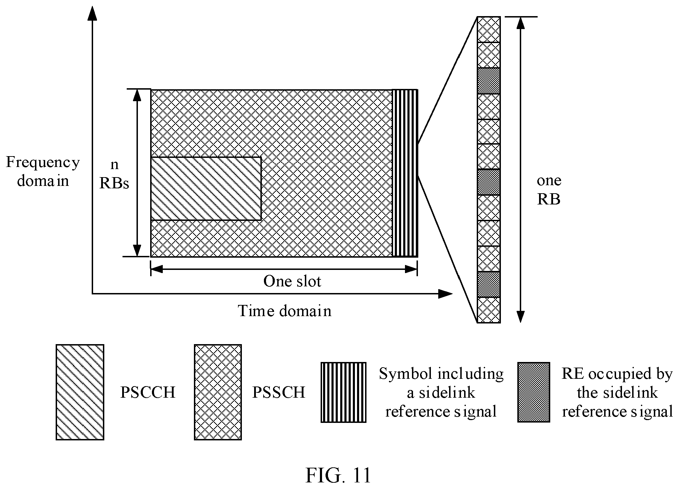

FIG. 11 is a schematic diagram of the sidelink reference signal carried on the first time-frequency resource according to some other embodiments of this application. The first time-frequency resource is one slot in time domain, and occupies n RBs in frequency domain, where n is a quantity of RBs occupied by the first time-frequency resource. Different from FIG. 10, in FIG. 11, the sidelink reference signal is sent on some REs in one RB, and the PSSCH is sent on remaining REs on a symbol on which the sidelink reference signal is located (that is, on idle REs that are not occupied by the sidelink reference signal), that is, the sidelink reference signal and the PSSCH are frequency division multiplexed or rate matched. In this way, resources can be fully used, and resource utilization can be improved.

Optionally, in some embodiments of this application, the sidelink reference signal may alternatively be located on any one or more symbols of the first time-frequency resource in time domain, and the plurality of symbols may be consecutive or inconsecutive. In other words, the sidelink reference signal may be located on any one or more symbols (that is, at any time domain position) of the first time-frequency resource. This is not limited in the embodiments of this application.

Optionally, in some embodiments of this application, a frequency domain bandwidth of the sidelink reference signal is the same as a bandwidth of the first time-frequency resource, or the bandwidth of the sidelink reference signal is the same as a bandwidth of the PSSCH.

Specifically, as shown in FIG. 10 and FIG. 11, the PSCCH and the PSSCH are partially frequency division multiplexed and partially time division multiplexed. The first time-frequency resource is one slot in time domain, and occupies n RBs in frequency domain, where n is a quantity of RBs occupied by the first time-frequency resource. The bandwidth of the sidelink reference signal is the same as the bandwidth of the first time-frequency resource. The bandwidth of the first time-frequency resource is the same as the bandwidth of the PSSCH. The bandwidth of the PSSCH is greater than a bandwidth of the PSCCH, and the bandwidth of the PSCCH is only a part of the bandwidth of the PSSCH.

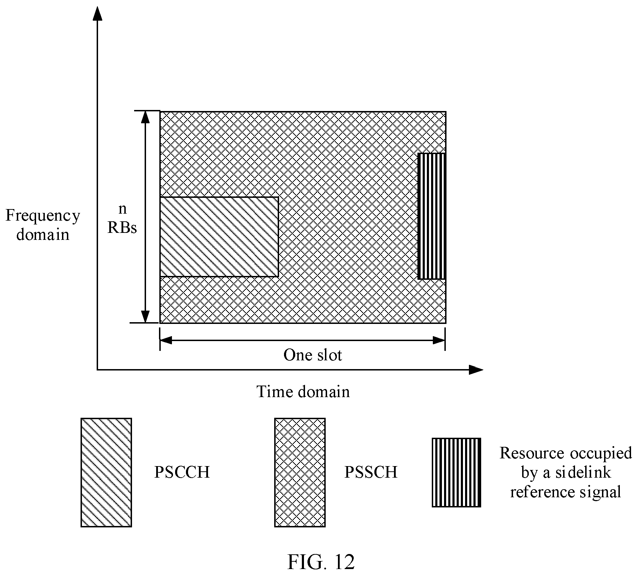

It should be understood that in the embodiments of this application, the bandwidth of the sidelink reference signal may alternatively be different from the bandwidth of the PSSCH. For example, FIG. 12 is a schematic diagram of the sidelink reference signal carried on the first time-frequency resource according to some embodiments of this application. As shown in FIG. 12, the first time-frequency resource is one slot in time domain, and occupies n RBs in frequency domain. A bandwidth of the PSSCH is greater than a bandwidth of the PSCCH, and the bandwidth of the PSCCH is only a part of the bandwidth of the PSSCH. The bandwidth of the sidelink reference signal is less than a bandwidth of the first time-frequency resource. In other words, the bandwidth of the sidelink reference signal is less than a bandwidth of the data. This is not limited in the embodiments of this application.

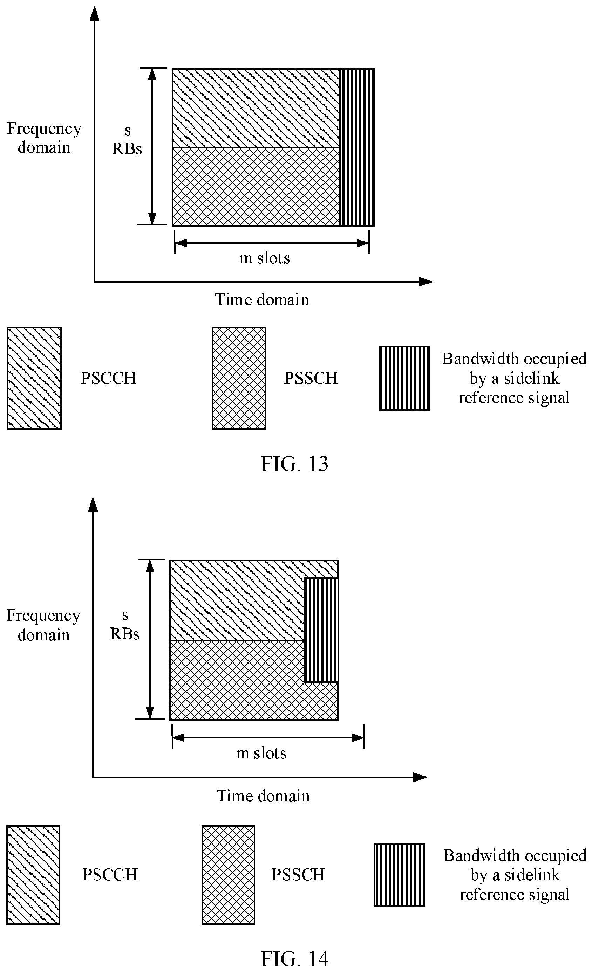

Optionally, in some embodiments of this application, a frequency domain bandwidth of the sidelink reference signal is the same as a sum of bandwidths of the PSCCH and the PSSCH. For example, FIG. 13 is a schematic diagram of the sidelink reference signal carried on the first time-frequency resource according to some embodiments of this application. The first time-frequency resource is m slots in time domain, and occupies s RBs in frequency domain. In FIG. 13, the PSCCH and the PSSCH are frequency division multiplexed. In FIG. 13, the frequency domain bandwidth of the sidelink reference signal is the same as the sum of the bandwidths of the PSCCH and the data PSSCH. To be specific, the bandwidth of the sidelink reference signal is the same as a bandwidth of the first time-frequency resource, and the bandwidth of the first time-frequency resource is the sum of the bandwidths of the PSCCH and the PSSCH.

It should be understood that in the embodiments of this application, the bandwidth of the sidelink reference signal may alternatively be less than the sum of the bandwidths of the PSCCH and the PSSCH. For example, FIG. 14 is a schematic diagram of the sidelink reference signal carried on the first time-frequency resource according to some embodiments of this application. In FIG. 14, the PSCCH and the PSSCH are frequency division multiplexed. The first time-frequency resource is m slots in time domain, and occupies s RBs in frequency domain. The bandwidth of the sidelink reference signal may be less than a sum of bandwidths of the PSCCH and the PSSCH. To be specific, the bandwidth of the sidelink reference signal is less than a bandwidth of the first time-frequency resource, and the bandwidth of the first time-frequency resource is the sum of the bandwidths of the PSCCH and the PSSCH. This is not limited in the embodiments of this application.

When the frequency domain bandwidth of the sidelink reference signal is the same as the bandwidth of the first time-frequency resource, or the bandwidth of the sidelink reference signal is the same as the bandwidth of the PSSCH, the first terminal device may not need to additionally indicate the bandwidth of the sidelink reference signal, no extra resource needs to be occupied to indicate the bandwidth of the sidelink reference signal, so that resources can be saved, and resource utilization can be improved.

In some other embodiments of this application, the bandwidth of the sidelink reference signal may be the same as the bandwidth occupied by the PSSCH, or may be different from the bandwidth occupied by the data PSSCH.

Optionally, in some other embodiments of this application, the bandwidth of the sidelink reference signal is the same as the bandwidth occupied by the PSCCH; or the bandwidth of the sidelink reference signal is different from the bandwidth occupied by the PSCCH.

Optionally, in some other embodiments of this application, a time-frequency resource occupied by the sidelink reference signal is the same as a time-frequency resource occupied by the data PSSCH; or a time-frequency resource occupied by the sidelink reference signal is different from a time-frequency resource occupied by the data PSSCH.

Optionally, in some other embodiments of this application, a time-frequency resource occupied by the sidelink reference signal may be the same as a time-frequency resource occupied by the PSCCH; or a time-frequency resource occupied by the sidelink reference signal is different from a time-frequency resource occupied by the PSCCH.

It should be understood that FIG. 10 to FIG. 14 are merely examples. In the embodiments of this application, the sidelink reference signal may be located at any position that is of the first time-frequency resource and that can be used to send the sidelink reference signal. In other words, in the embodiments of this application, a quantity of REs and positions of the REs occupied by the sidelink reference signal on the first time domain resource are not limited. In other words, the sidelink reference signal may be located at any frequency domain position of the first time-frequency resource.

Optionally, in some embodiments of this application, the first time-frequency resource is one slot or one mini-slot in time domain.

A time length of one mini-slot (mini-slot) is shorter than a time length of one slot (slot). For example, a time length of one mini-slot may be two symbols, four symbols, or seven symbols. In some embodiments of this application, a time length of the first time-frequency resource in time domain may be one slot or one mini-slot.

It should be understood that, in the embodiments of this application, the first time-frequency resource may alternatively occupy a longer time length in time domain. For example, the first time-frequency resource may include a plurality of slots. Alternatively, the time length of the first time-frequency resource may be less than one slot. The first time-frequency resource may occupy a plurality of subcarriers in frequency domain. In other words, in the embodiments of this application, a size of the first time-frequency resource is not limited. There may be a plurality of first time-frequency resources, and the plurality of first time-frequency resources may be periodic or aperiodic. This is not limited in the embodiments of this application.

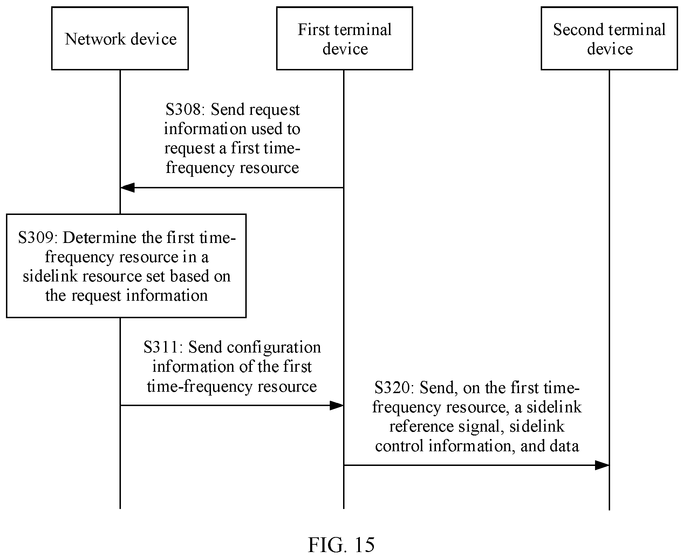

FIG. 15 is a schematic interaction diagram of a sidelink reference signal transmission method according to some embodiments of this application. In some embodiments, based on the steps of the method shown in FIG. 9, the method 300 further includes the following steps.

S308: The first terminal device sends, to the network device, request information used to request the first time-frequency resource.

S309: The network device determines the first time-frequency resource in a sidelink resource set based on the request information, where a time-frequency resource in the sidelink resource set is used to transmit sidelink information.

In the foregoing step S310, the obtaining, by a first terminal device, a first time-frequency resource includes:
S311: The first terminal device receives the configuration information of the first time-frequency resource from the network device.

Specifically, for descriptions of S320 shown in FIG. 15, refer to the foregoing descriptions of S320 in FIG. 9. For brevity, details are not described herein again.

When the first terminal device needs to determine the size and the position of the first time-frequency resource, the first terminal device may send, to the network device, the request information used to request the first time-frequency resource. That is, in S308, the first terminal device sends, to the network device, the request information used to request the first time-frequency resource. Optionally, the request information may include data, control information, a quantity of sidelink reference signals, or the like that need to be sent by the first terminal device to the second terminal device, so that the network device allocates the first time-frequency resource to the first terminal device more accurately. In S309, the network device determines the first time-frequency resource in the sidelink resource set based on the request information, where the time-frequency resource in the sidelink resource set is used to transmit the sidelink information. The sidelink resource set may include a V2X resource set, a D2D resource set, or the like. The V2X resource set is used as an example for description. The network device determines the first time-frequency resource in the V2X resource set, and a time-frequency resource in the V2X resource set (which may also be referred to as a V2X resource pool) is used to transmit V2X information; to be specific, the time-frequency resource in the V2X resource set is used for transmitting data or control information between terminal devices. After the network device determines the first time-frequency resource in the V2X resource set based on the request information, in step S311, the network device may send the configuration information of the first time-frequency resource to the first terminal device, that is, the first terminal device receives the configuration information of the first time-frequency resource from the network device. Specifically, the network device may notify the first terminal device of the configuration information of the first time-frequency resource by using control signaling, for example, DCI, media access control (media access control, MAC) layer signaling, or RRC layer signaling. The configuration information of the first time-frequency resource is used to indicate the size, the position, and the like of the first time-frequency resource. For example, the configuration information of the first time-frequency resource may include the time domain start position and the frequency domain start position of the first time-frequency resource, the size of the first time-frequency resource in time domain and the size of the first time-frequency resource in frequency domain, or the time domain start and end positions of the first time-frequency resource and the frequency domain start and end positions of the first time-frequency resource. The first terminal device may determine (obtain) the first time-frequency resource based on the configuration information of the first time-frequency resource. In this embodiment of this application, the first time-frequency resource may be periodic, and each first time-frequency resource may be one slot or have another time length in time domain. Alternatively, there may be a plurality of first time-frequency resources.

It should be understood that in some embodiments of this application, the second terminal device may alternatively request the configuration information of the first time-frequency resource from the network device. In other words, the second terminal device may alternatively send, to the network device, the request information used to request the first time-frequency resource. After the network device determines the first time-frequency resource in the sidelink resource set based on the request information, the network device may further notify the second terminal device of configuration information of the first time-frequency resource, so that the second terminal device correctly receives the sidelink reference signal, the control information, and the data. Specifically, the network device may also notify the second terminal device of the configuration information of the first time-frequency resource by using control signaling, for example, DCI, MAC layer signaling, or RRC layer signaling. The first terminal device may not need to notify the second terminal device of the configuration information of the first time-frequency resource.

In a manner in which the network device determines the first time-frequency resource and notifies the first terminal device of the first time-frequency resource, accuracy of the first time-frequency resource is relatively high, so that a conflict between the first time-frequency resource and a data transmission resource on another sidelink can be avoided to a large extent, thereby further improving efficiency and accuracy of sending the sidelink reference signal by the first terminal device to the second terminal device.

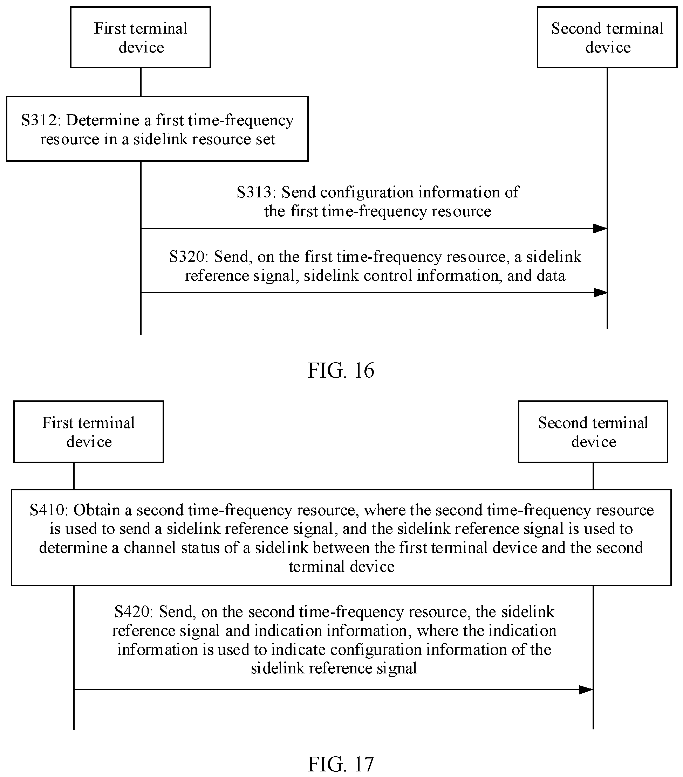

FIG. 16 is a schematic interaction diagram of a sidelink reference signal transmission method according to some embodiments of this application. In some embodiments, in the method shown in FIG. 9, step S310 of obtaining, by a first terminal device, a first time-frequency resource includes:
S312: The first terminal device determines the first time-frequency resource in a sidelink resource set.

The method 300 may further include the following step.

S313: The first terminal device sends the configuration information of the first time-frequency resource to the second terminal device.

Specifically, for descriptions of S320 shown in FIG. 16, refer to the foregoing descriptions of S320 in FIG. 9. For brevity, details are not described herein again.

When the first terminal device needs to determine the size and the position of the first time-frequency resource, the first terminal device may determine the first time-frequency resource in the sidelink resource set, that is, does not need to request the first time-frequency resource from the network device. In other words, in S312, the first terminal device may determine the first time-frequency resource in the preconfigured sidelink resource set. The sidelink resource set may be preconfigured by the network device for the first terminal device or predefined in a protocol. The sidelink resource set may include a V2X resource set, a D2D resource set, or the like. The V2X resource set is used as an example for description. The first terminal device may determine the first time-frequency resource in the V2X resource set, and a time-frequency resource in the V2X resource set (which may also be referred to as a V2X resource pool) is used to transmit V2X information; to be specific, the time-frequency resource in the V2X resource set is used for transmitting data or control information between terminal devices. In S313, after obtaining the configuration information of the first time-frequency resource, the first terminal device may send the configuration information of the first time-frequency resource to the second terminal device, so that the second terminal device correctly receives the sidelink reference signal, the control information, and the data. The second terminal device may not request the configuration information of the first time-frequency resource from the network device, and the network device may not need to notify the second terminal device of the configuration information of the first time-frequency resource.

This application further provides a sidelink reference signal transmission method. FIG. 17 is a schematic interaction diagram of a sidelink reference signal transmission method 400 according to some embodiments of this application. As shown in FIG. 17, the method 400 includes step S410 and step S420.

S410: A first terminal device and a second terminal device obtain a second time-frequency resource, where the second time-frequency resource is used to send a sidelink reference signal, and the sidelink reference signal is used to determine a channel status of a sidelink between the first terminal device and the second terminal device.

S420: The first terminal device sends, on the second time-frequency resource, the sidelink reference signal and indication information to the second terminal device, where the indication information is used to indicate configuration information of the sidelink reference signal. Correspondingly, the second terminal device receives, on the second time-frequency resource, the sidelink reference signal and the indication information from the first terminal device.

According to the sidelink reference signal transmission method provided in this application, the terminal device can send the sidelink reference signal on the time-frequency resource separately used to send the sidelink reference signal, thereby improving flexibility and reliability of sending the sidelink reference signal on the sidelink.

Specifically, when the first terminal device needs to send the sidelink reference signal to the second terminal device, the first terminal device needs to determine the time-frequency resource (the second time-frequency resource) for sending the sidelink reference signal. The second terminal device also needs to obtain the second time-frequency resource, to accurately receive the sidelink reference signal. In the foregoing step S410, the first terminal device and the second terminal device obtain the second time-frequency resource. The second time-frequency resource is a time-frequency resource used by the first terminal device to send the sidelink reference signal to the second terminal device. In other words, the second time-frequency resource is a time-frequency resource dedicated for sending the sidelink reference signal. The sidelink reference signal is used to determine the channel status of the sidelink. The sidelink is a direct link between the first terminal device and the second terminal device. The sidelink reference signal may occupy all REs of the second time-frequency resource, or may occupy some REs of the second time-frequency resource.

In S420, the first terminal device sends, on the second time-frequency resource, the sidelink reference signal and the indication information to the second terminal device, where the indication information is used to indicate the configuration information of the sidelink reference signal. The configuration information of the sidelink reference signal is used by the second terminal device to correctly receive the sidelink reference signal. For example, the second terminal device may determine, based on the configuration information of the sidelink reference signal, REs that are of the second time-frequency resource and that are used to detect the sidelink reference signal and how to detect the sidelink reference signal.

According to the sidelink reference signal transmission method provided in this application, the terminal device can send, on the time-frequency resource separately used to send the sidelink reference signal, the sidelink reference signal and the indication information that is used to indicate the configuration information of the sidelink reference signal, so that when sending the sidelink reference signal, the terminal device no longer depends on a PSCCH or a PSSCH sent by the terminal device, thereby improving flexibility and reliability of sending the sidelink reference signal on the sidelink.

Further, the second terminal device may obtain the second time-frequency resource. After obtaining the second time-frequency resource, the second terminal device may correctly receive, on the second time-frequency resource, the sidelink reference signal and the indication information that are sent by the first terminal device, so that the second terminal device correctly receives the sidelink reference signal and the indication information.

Optionally, in some embodiments of this application, after obtaining the second time-frequency resource, the first terminal device may notify the second terminal device of configuration information of the second time-frequency resource. That is, the second terminal device may obtain the second time-frequency resource from the first terminal device. Specifically, the second terminal device may receive, in a blind detection manner, the PSCCH sent by the first terminal device, and then receive, based on indication information on the PSCCH, the PSCCH sent by the first terminal device. For example, the indication information on the PSCCH may be indication information used to indicate a position of the time-frequency resource occupied by the PSCCH and a coding scheme of the PSCCH. Alternatively, the first terminal device may send, to the second terminal device, configuration information including the configuration information of the second time-frequency resource.

Optionally, in some embodiments of this application, the second terminal device may request the configuration information of the second time-frequency resource from a network device, and the network device may notify the second terminal device of the configuration information of the second time-frequency resource. That is, the second terminal device may obtain the second time-frequency resource from the network device. The first terminal device may not need to notify the second terminal device of the configuration information of the second time-frequency resource. Specifically, the second terminal device blindly detects DCI carried on a PDCCH sent by the network device, and learns of the configuration information of the second time-frequency resource by using the detected DCI.

In this embodiment of this application, the sidelink reference signal may include a cell-specific reference signal, a CSI-RS, and another sidelink reference signal used to measure channel quality of the sidelink. This is not limited in the embodiments of this application.

Optionally, in some embodiments of this application, the configuration information of the sidelink reference signal includes one or more of the following information:
a bandwidth of the sidelink reference signal, a quantity of antenna ports of the sidelink reference signal, a quantity of symbols occupied by the sidelink reference signal, a density of the sidelink reference signal, a code division multiplexing manner of the sidelink reference signal, a resource mapping mode of the sidelink reference signal, and a scrambling identity of the sidelink reference signal.

The density of the sidelink reference signal is a quantity of REs, in one RB and one slot (slot), occupied by each transmit antenna port used to send the sidelink reference signal. The bandwidth of the sidelink reference signal may be a size of a frequency domain resource occupied by the sidelink reference signal. The quantity of antenna ports of the sidelink reference signal may be a quantity of antenna ports for sending the sidelink reference signal. The resource mapping mode of the sidelink reference signal may be a mapping mode in one RB and one slot. For example, the mapping mode includes a quantity of occupied symbols, an index of the symbol, and an index of an occupied RE. The second terminal device may determine sending information of the sidelink reference signal based on the configuration information of the sidelink reference signal, to accurately receive the sidelink reference signal.

It should be understood that, in this embodiment of this application, the configuration information of the sidelink reference signal may further include another configuration parameter related to the sidelink reference signal. For example, the configuration information of the sidelink reference signal may further include a periodicity of the sidelink reference signal. This is not limited in the embodiments of this application.

Optionally, in some embodiments of this application, the indication information is the configuration information of the sidelink reference signal. Alternatively, the indication information is indication information of the configuration information of the sidelink reference signal.

Specifically, in some other embodiments of this application, the first terminal device may send, on the second time-frequency resource, the configuration information of the sidelink reference signal to the second terminal device. That is, the indication information is the configuration information of the sidelink reference signal.

Optionally, in some other embodiments of this application, the indication information sent by the first terminal device on the second time-frequency resource is the indication information of the configuration information of the sidelink reference signal. For example, the indication information of the configuration information of the sidelink reference signal may be a resource index (resource index) of the sidelink reference signal, and the resource index of the sidelink reference signal corresponds to the configuration information of the sidelink reference signal. In other words, the indication information sent by the first terminal device on the second time-frequency resource may be the resource index (resource index) of the sidelink reference signal.

Specifically, one or more sidelink reference signals may be preconfigured or predefined for the first terminal device and the second terminal device, and an identifier is configured or predefined for configuration information of each sidelink reference signal. The resource identifier of each sidelink reference signal may be considered as a resource index of the sidelink reference signal, the resource index of the sidelink reference signal is used to identify the configuration information of the sidelink reference signal, or the resource index of the sidelink reference signal is used to indicate the configuration information of the sidelink reference signal.

For example, a resource index t of a sidelink reference signal and a resource index q (t≠q) of a sidelink reference signal respectively indicate different configuration information of the sidelink reference signals. The resource index t of the sidelink reference signal may be considered as a resource identifier of the sidelink reference signal (namely, the indication information of the configuration information of the sidelink reference signal). After obtaining the resource index (resource index) of the sidelink reference signal, the second terminal device may determine, based on the resource index of the sidelink reference signal, the configuration information that is of the sidelink reference signal and that is indicated by the resource index of the sidelink reference signal, so that the second terminal device receives the sidelink reference signal on the second time-frequency resource based on the configuration information of the sidelink reference signal.

Optionally, in some embodiments of this application, the first terminal device may send, on the second time-frequency resource, the sidelink reference signal and the PSCCH to the second terminal device, where the PSCCH includes the indication information; or the first terminal device may send, on the second time-frequency resource, the sidelink reference signal and the PSSCH to the second terminal device, where the PSSCH includes the indication information.

Optionally, in some embodiments of this application, the bandwidth of the sidelink reference signal may be the same as a bandwidth of the second time-frequency resource. When a frequency domain bandwidth of the sidelink reference signal is the same as the bandwidth of the second time-frequency resource, the first terminal device may not need to additionally indicate the bandwidth of the sidelink reference signal, no extra resource needs to be occupied to indicate the bandwidth of the sidelink reference signal, so that resources can be saved, and resource utilization can be improved.

Optionally, in some embodiments of this application, the bandwidth of the sidelink reference signal may alternatively be different from the bandwidth of the second time-frequency resource.

Optionally, in some embodiments of this application, the sidelink reference signal is located on the last one or more symbols of the second time-frequency resource in time domain. In other words, the first terminal device sends the sidelink reference signal to the second terminal device on the last one or more symbols of the second time-frequency resource.

It should be understood that, in some embodiments of this application, the sidelink reference signal may alternatively be located on any one or more symbols of the second time-frequency resource in time domain, and the plurality of symbols may be consecutive or inconsecutive. In other words, the sidelink reference signal may be located on any one or more symbols (that is, at any time domain position) of the second time-frequency resource. This is not limited in the embodiments of this application.

It should be further understood that, in some embodiments of this application, the sidelink reference signal may occupy any one or more subcarriers of the second time-frequency resource in frequency domain, and the plurality of subcarriers may be consecutive or inconsecutive. In other words, the sidelink reference signal may be located at any frequency domain position of the second time-frequency resource. This is not limited in the embodiments of this application.

Optionally, in some embodiments of this application, the second time-frequency resource is one slot or one mini-slot in time domain.

It should be understood that, in the embodiments of this application, the second time-frequency resource may alternatively occupy a longer time length in time domain. For example, the second time-frequency resource may be a plurality of slots. Alternatively, the time length of the second time-frequency resource may be less than one slot. The second time-frequency resource may occupy a plurality of subcarriers in frequency domain. In other words, in the embodiments of this application, a size of the second time-frequency resource is not limited. There may be a plurality of second time-frequency resources, and the plurality of second time-frequency resources may be periodic or aperiodic. This is not limited in the embodiments of this application.

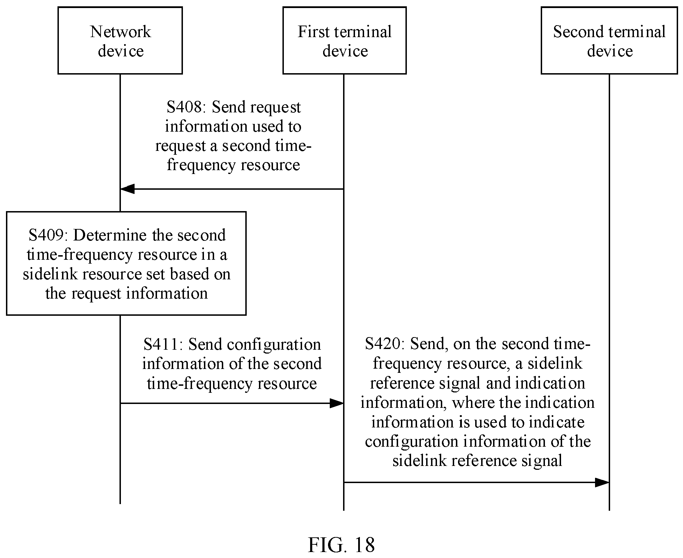

FIG. 18 is a schematic interaction diagram of a sidelink reference signal transmission method according to some embodiments of this application. In some embodiments, based on the steps of the method shown in FIG. 17, the method 300 further includes the following steps.

S408: The first terminal device sends, to the network device, request information used to request the second time-frequency resource.

S409: The network device determines the second time-frequency resource in a sidelink resource set based on the request information.

In the foregoing step S410, the obtaining, by a first terminal device, a second time-frequency resource includes:
S411: The first terminal device receives the configuration information of the second time-frequency resource from the network device.

Specifically, for descriptions of S420 shown in FIG. 18, refer to the foregoing descriptions of S420 in FIG. 17. For brevity, details are not described herein again.

When the first terminal device needs to determine the size and the position of the second time-frequency resource, the first terminal device may send, to the network device, the request information used to request the second time-frequency resource. That is, in S408, the first terminal device sends, to the network device, the request information used to request the second time-frequency resource. Optionally, the request information may include a quantity of sidelink reference signals and the like that need to be sent by the first terminal device to the second terminal device, so that the network device allocates the second time-frequency resource to the second terminal device more accurately. In S409, the network device determines the second time-frequency resource in the sidelink resource set based on the request information, where the time-frequency resource in the sidelink resource set is used to transmit sidelink information. The sidelink resource set may include a V2X resource set, a D2D resource set, or the like. The V2X resource set is used as an example for description. The network device may determine the second time-frequency resource in the V2X resource set, and a time-frequency resource in the V2X resource set (which may also be referred to as a V2X resource pool) is used to transmit V2X information; to be specific, the time-frequency resource in the V2X resource set is used for transmitting data or control information between terminal devices. After the network device determines the second time-frequency resource in the V2X resource set based on the request information, in step S411, the network device may send the configuration information of the second time-frequency resource to the first terminal device, that is, the first terminal device receives the configuration information of the second time-frequency resource from the network device. Specifically, the network device may notify the first terminal device of the configuration information of the second time-frequency resource by using control signaling, for example, DCI, MAC layer signaling, or RRC layer signaling. The configuration information of the second time-frequency resource is used to indicate the size, the position, and the like of the second time-frequency resource. For example, the configuration information of the second time-frequency resource may include a time domain start position and a frequency domain start position of the second time-frequency resource, a size of the second time-frequency resource in time domain and a size of the second time-frequency resource in frequency domain, or time domain start and end positions of the second time-frequency resource and frequency domain start and end positions of the second time-frequency resource. The first terminal device may determine (obtain) the first time-frequency resource based on the configuration information of the second time-frequency resource.

For example, in step S409, the network device periodically configures, in a corresponding sidelink resource set, a slot used to send the sidelink reference signal. The sidelink resource set may include a plurality of slots. The network device may periodically configure, in the plurality of slots, a slot used to send the sidelink reference signal, and notify the first terminal device and/or the second terminal device of the slot used to periodically send the sidelink reference signal. That is, in this embodiment of this application, the second time-frequency resource may be periodic, and each second time-frequency resource may be one slot in time domain. Alternatively, there may be a plurality of second time-frequency resources.

It should be understood that in some embodiments of this application, the second terminal device may alternatively request the configuration information of the second time-frequency resource from the network device. In other words, the second terminal device may alternatively send, to the network device, the request information used to request the second time-frequency resource. After the network device determines the second time-frequency resource in the sidelink resource set based on the request information, the network device may also notify the second terminal device of the configuration information of the second time-frequency resource, so that the second terminal device correctly receives the sidelink reference signal and the indication information. Specifically, the network device may also notify the second terminal device of the configuration information of the second time-frequency resource by using control signaling, for example, DCI, MAC layer signaling, or RRC layer signaling. The first terminal device may not need to notify the second terminal device of the configuration information of the second time-frequency resource.

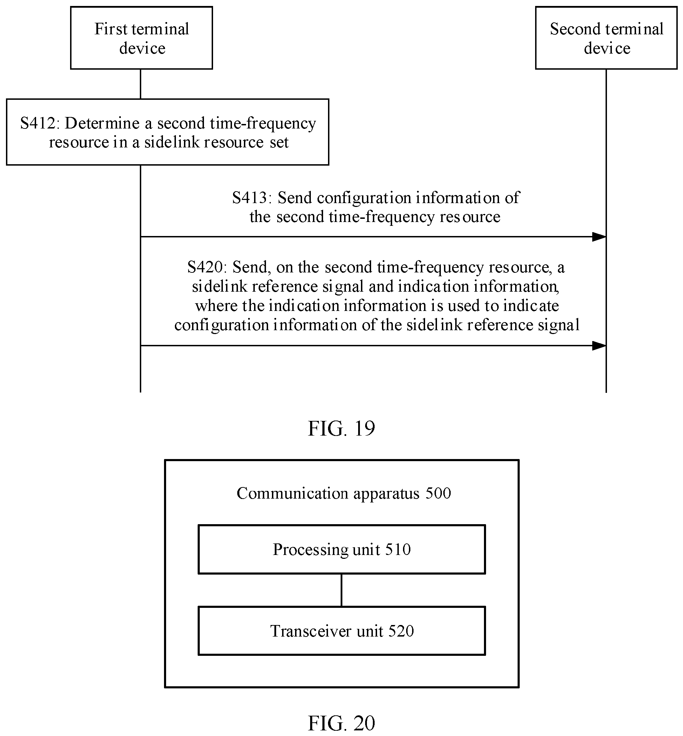

FIG. 19 is a schematic interaction diagram of a sidelink reference signal transmission method according to some embodiments of this application. In some embodiments, in the method shown in FIG. 17, step S410 of obtaining, by a first terminal device, a second time-frequency resource includes:
S412: The first terminal device determines the second time-frequency resource in a sidelink resource set.

The method 400 may further include the following step.

S413: The first terminal device sends the configuration information of the second time-frequency resource to the second terminal device.

Specifically, for descriptions of S420 shown in FIG. 19, refer to the foregoing descriptions of S420 in FIG. 17. For brevity, details are not described herein again.

When the first terminal device needs to determine the size and the position of the second time-frequency resource, the first terminal device may determine the second time-frequency resource in the sidelink resource set, that is, does not need to request the second time-frequency resource from the network device. In other words, in S412, the first terminal device may determine the second time-frequency resource in the preconfigured sidelink resource set. The sidelink resource set may be preconfigured by the network device for the second terminal device or predefined in a protocol, and the sidelink resource set may include a V2X resource set, a D2D resource set, or the like. The V2X resource set is used as an example for description. The first terminal device may determine the second time-frequency resource in the V2X resource set. A time-frequency resource in the V2X resource set (which may also be referred to as a V2X resource pool) is used to transmit V2X information, and the V2X information includes the sidelink reference signal. In S413, after obtaining the configuration information of the second time-frequency resource, the first terminal device may send the configuration information of the second time-frequency resource to the second terminal device, so that the second terminal device correctly receives the sidelink reference signal and the indication information. The second terminal device may not request the configuration information of the second time-frequency resource from the network device, and the network device may not need to notify the second terminal device of the configuration information of the second time-frequency resource.

According to the sidelink reference signal transmission method provided in this application, the terminal device can send, on the time-frequency resource separately used to send the sidelink reference signal, the sidelink reference signal and the indication information used to indicate the configuration information of the sidelink reference signal. When sending the sidelink reference signal, the terminal device no longer depends on the PSCCH or the PSSCH sent by the terminal device, thereby improving flexibility and reliability of sending the sidelink reference signal on the sidelink.

It should be understood that in the embodiments of this application, "first", "second", and the like are merely for ease of description. For example, the first time-frequency resource and the second time-frequency resource are merely used to indicate specific time-frequency resources, and should not cause any impact on the time-frequency resources. The foregoing first, second, and the like should not impose any limitation on the embodiments of this application.

It should be further understood that, the foregoing descriptions of the embodiments of this application focus on a difference between the embodiments. For same or similar parts that are not mentioned, refer to each other. For brevity, details are not described herein again.

It should be further understood that sequence numbers of the foregoing processes do not mean execution sequences. The execution sequences of the processes should be determined based on functions and internal logic of the processes, and should not constitute any limitation on implementation processes of the embodiments of this application.

It should be further understood that in the embodiments of this application, "presetting" and "predefinition" may be implemented by prestoring corresponding code or a corresponding table in a device (including, for example, a terminal device and a network device) or in another manner that can be used to indicate related information. A specific implementation is not limited in this application.

It should be understood that division of manners, cases, types, and embodiments in the embodiments of this application are merely for ease of description, but should not constitute any special limitation, and features in various manners, types, cases, and embodiments may be combined when there is no contradiction.

It should be further understood that in the embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

The sidelink reference signal transmission method in the embodiments of this application is described above in detail with reference to FIG. 1 to FIG. 19. Communication apparatuses in the embodiments of this application are described below with reference to FIG. 20 to FIG. 31. It should be understood that the communication apparatuses in FIG. 20 to FIG. 30 can perform the steps of the sidelink reference signal transmission method in the embodiments of this application.

FIG. 20 is a schematic block diagram of a communication apparatus 500 according to an embodiment of this application. The apparatus 500 may correspond to the first terminal device described in the embodiments of the foregoing methods, or may be a chip or a component used in the first terminal device. In addition, modules or units in the apparatus 500 are configured to perform the foregoing method 300 and actions or processing processes performed by the first terminal device in the embodiments. As shown in FIG. 20, the communication apparatus 500 may include a processing unit 510 and a transceiver unit 520.

The processing unit 510 is configured to obtain a first time-frequency resource, where the first time-frequency resource is used to send sidelink control information and data.

The transceiver unit 520 is configured to send, on the first time-frequency resource, a sidelink reference signal, the sidelink control information, and the data to a second terminal device, where the sidelink reference signal is used to determine a channel status of a sidelink between the first terminal device and the second terminal device; and the communication apparatus is the first terminal device, or the first terminal device includes the communication apparatus.

Optionally, in some embodiments of this application, the sidelink control information is used to indicate configuration information of the sidelink reference signal.

Optionally, in some embodiments of this application, the transceiver unit 520 is specifically configured to send the sidelink reference signal to the second terminal device on the last one or more symbols of the first time-frequency resource.

Optionally, in some embodiments of this application, the transceiver unit 520 is specifically configured to send the sidelink reference signal to the second terminal device on any one or more symbols of the first time-frequency resource.

Optionally, in some embodiments of this application, a frequency domain bandwidth of the sidelink reference signal is the same as a bandwidth of the first time-frequency resource, or a bandwidth of the sidelink reference signal is the same as a bandwidth of the data.

Optionally, in some embodiments of this application, the control information includes the configuration information of the sidelink reference signal, or the control information includes indication information of the configuration information of the sidelink reference signal.

Optionally, in some embodiments of this application, the indication information is a resource index of the sidelink reference signal, and the resource index of the sidelink reference signal corresponds to the configuration information of the sidelink reference signal.

Optionally, in some embodiments of this application, the configuration information of the sidelink reference signal includes one or more of the following information:
the bandwidth of the sidelink reference signal, a quantity of antenna ports of the sidelink reference signal, a quantity of symbols occupied by the sidelink reference signal, a density of the sidelink reference signal, a code division multiplexing manner of the sidelink reference signal, a resource mapping mode of the sidelink reference signal, and a scrambling identity of the sidelink reference signal.

Optionally, in some embodiments of this application, the transceiver unit 520 is further configured to: send, to a network device, request information used to request the first time-frequency resource; and receive configuration information of the first time-frequency resource from the network device.

Optionally, in some embodiments of this application, the processing unit 510 is specifically configured to determine the first time-frequency resource in a sidelink resource set, where a time-frequency resource in the sidelink resource set is used to transmit sidelink information.

Optionally, in some embodiments of this application, the first time-frequency resource is one slot or one mini-slot in time domain.

It should be understood that for a specific process in which the units in the apparatus 500 perform the foregoing corresponding steps, refer to the foregoing related descriptions of the first terminal device in the foregoing related embodiments of the method 300 with reference to FIG. 3 to FIG. 13. For brevity, details are not described herein again.

Optionally, the transceiver unit 520 may include a receiving unit (module) and a sending unit (module), configured to perform the steps of sending information and receiving information that are performed by the first terminal device in the foregoing embodiments of the method 300 and the embodiments shown in FIG. 9, FIG. 15, and FIG. 16. Optionally, the communication apparatus 500 may further include a storage unit 530, configured to store instructions executed by the processing unit 510 and the transceiver unit 520. The processing unit 510, the transceiver unit 520, and the storage unit 530 are in communication connection. The storage unit 530 stores the instructions. The processing unit 510 is configured to execute the instructions stored in the storage unit 530. The transceiver unit 520 is configured to perform specific signal sending and receiving under driving of the processing unit 510.

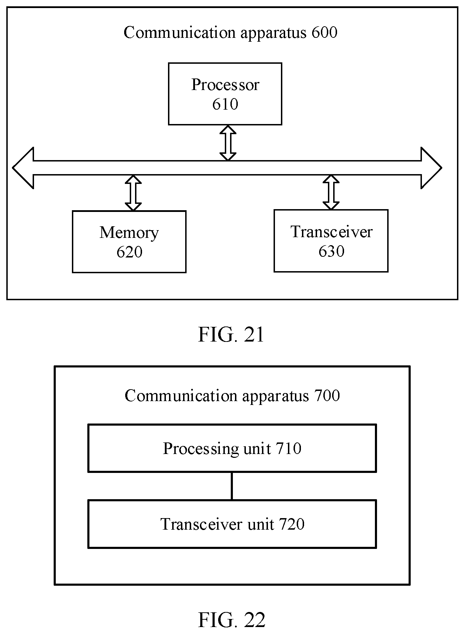

It should be understood that, the transceiver unit 520 may be implemented by using a transceiver, the processing unit 510 may be implemented by using a processor, and the storage unit 530 may be implemented by using a memory. As shown in FIG. 21, a communication apparatus 600 may include a processor 610, a memory 620, and a transceiver 630.

The communication apparatus 500 shown in FIG. 20 or the communication apparatus 600 shown in FIG. 21 can implement the steps performed by the first terminal device in the foregoing embodiments of the method 300 and the embodiments shown in FIG. 9, FIG. 15, and FIG. 16. For similar descriptions, refer to the descriptions in the foregoing corresponding method. To avoid repetition, details are not described herein again.

It should be further understood that the communication apparatus 500 shown in FIG. 20 or the communication apparatus 600 shown in FIG. 21 may be a terminal device.

FIG. 22 is a schematic block diagram of a communication apparatus 700 according to an embodiment of this application. The apparatus 700 may correspond to the second terminal device described in the embodiments of the foregoing methods, or may be a chip or a component used in the second terminal device. In addition, modules or units in the apparatus 700 are configured to perform the foregoing method 300 and actions or processing processes performed by the second terminal device in the embodiments. As shown in FIG. 22, the communication apparatus 700 may include a processing unit 710 and a transceiver unit 720.

The processing unit 710 is configured to obtain a first time-frequency resource, where the first time-frequency resource is used to receive sidelink control information and data.

The transceiver unit 720 is configured to receive, on the first time-frequency resource, a sidelink reference signal, the sidelink control information, and the data from a first terminal device, where the sidelink reference signal is used to determine a channel status of a sidelink between the first terminal device and the second terminal device; and the communication apparatus is the second terminal device, or the second terminal device includes the communication apparatus.

Optionally, in some embodiments of this application, the sidelink control information is used to indicate configuration information of the sidelink reference signal.

Optionally, in some embodiments of this application, the transceiver unit 720 is specifically configured to receive the sidelink reference signal from the first terminal device on the last one or more symbols of the first time-frequency resource.

Optionally, in some embodiments of this application, the transceiver unit 720 is specifically configured to receive the sidelink reference signal from the first terminal device on any one or more symbols of the first time-frequency resource.

Optionally, in some embodiments of this application, a frequency domain bandwidth of the sidelink reference signal is the same as a bandwidth of the first time-frequency resource, or a bandwidth of the sidelink reference signal is the same as a bandwidth of the data.

Optionally, in some embodiments of this application, the control information includes the configuration information of the sidelink reference signal, or the control information includes indication information of the configuration information of the sidelink reference signal; and the indication information is a resource index of the sidelink reference signal, and the resource index of the sidelink reference signal corresponds to the configuration information of the sidelink reference signal.

Optionally, in some embodiments of this application, the first time-frequency resource is one slot or one mini-slot in time domain.

It should be understood that for a specific process in which the units in the apparatus 700 perform the foregoing corresponding steps, refer to the foregoing related descriptions of the second terminal device in the related embodiments of the method 300 with reference to FIG. 3 to FIG. 13. For brevity, details are not described herein again.

Optionally, the transceiver unit 720 may include a receiving unit (module) and a sending unit (module), configured to perform the steps of sending information and receiving information that are performed by the second terminal device in the foregoing embodiments of the method 300 and the embodiments shown in FIG. 9, FIG. 17, and FIG. 18. Optionally, the communication apparatus 700 may further include a storage unit 730, configured to store instructions executed by the processing unit 710 and the transceiver unit 720. The processing unit 710, the transceiver unit 720, and the storage unit 730 are in communication connection. The storage unit 730 stores the instructions. The processing unit 710 is configured to execute the instructions stored in the storage unit 730. The transceiver unit 720 is configured to perform specific signal sending and receiving under driving of the processing unit 710.

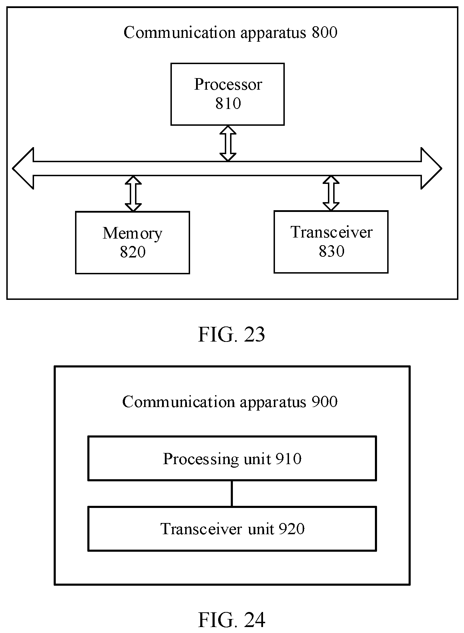

It should be understood that, the transceiver unit 720 may be implemented by using a transceiver, the processing unit 710 may be implemented by using a processor, and the storage unit 730 may be implemented by using a memory. As shown in FIG. 23, a communication apparatus 800 may include a processor 810, a memory 820, and a transceiver 830.

The communication apparatus 700 shown in FIG. 22 or the communication apparatus 800 shown in FIG. 23 can implement the steps performed by the second terminal device in the foregoing embodiments of the method 300 and the embodiments shown in FIG. 9, FIG. 15, and FIG. 16. For similar descriptions, refer to the descriptions in the foregoing corresponding method. To avoid repetition, details are not described herein again.

It should be further understood that the communication apparatus 700 shown in FIG. 22 or the communication apparatus 800 shown in FIG. 23 may be a terminal device.

FIG. 24 is a schematic block diagram of a communication apparatus 900 according to an embodiment of this application. The apparatus 900 may correspond to the first terminal device described in the embodiments of the foregoing methods, or may be a chip or a component used in the first terminal device. In addition, modules or units in the apparatus 900 are configured to perform the foregoing method 400 and actions or processing processes performed by the first terminal device in the embodiments. As shown in FIG. 24, the communication apparatus 900 may include a processing unit 910 and a transceiver unit 920.

The processing unit 910 is configured to obtain a second time-frequency resource, where the second time-frequency resource is used to send a sidelink reference signal.

The transceiver unit 920 is configured to send, on the second time-frequency resource, the sidelink reference signal and indication information to a second terminal device, where the indication information is used to indicate configuration information of the reference signal, and the sidelink reference signal is used to determine a channel status of a sidelink between the first terminal device and the second terminal device; and the communication apparatus is the first terminal device, or the first terminal device includes the communication apparatus.

Optionally, in some embodiments of this application, the indication information is the configuration information of the sidelink reference signal, or the indication information is indication information of the configuration information of the sidelink reference signal.

Optionally, in some embodiments of this application, the indication information is a resource index of the sidelink reference signal, and the resource index of the sidelink reference signal corresponds to the configuration information of the sidelink reference signal.

Optionally, in some embodiments of this application, the configuration information of the sidelink reference signal includes one or more of the following information:
a bandwidth of the sidelink reference signal, a quantity of antenna ports of the sidelink reference signal, a quantity of symbols occupied by the sidelink reference signal, a density of the sidelink reference signal, a code division multiplexing manner of the sidelink reference signal, a resource mapping mode of the sidelink reference signal, and a scrambling identity of the sidelink reference signal.

Optionally, in some embodiments of this application, the transceiver unit 920 is further configured to: send, to a network device, request information used to request the second time-frequency resource; and receive configuration information of the second time-frequency resource from the network device.

Optionally, in some embodiments of this application, the processing unit 910 is specifically configured to:
determine the second time-frequency resource in a sidelink resource set, where a time-frequency resource in the sidelink resource set is used to transmit sidelink information.

Optionally, the transceiver unit 920 may include a receiving unit (module) and a sending unit (module), configured to perform the steps of sending information and receiving information that are performed by the first terminal device in the foregoing embodiments of the method 300 and the embodiments shown in FIG. 17 to FIG. 19. Optionally, the communication apparatus 900 may further include a storage unit 930, configured to store instructions executed by the processing unit 910 and the transceiver unit 920. The processing unit 910, the transceiver unit 920, and the storage unit 930 are in communication connection. The storage unit 930 stores the instructions. The processing unit 910 is configured to execute the instructions stored in the storage unit 930. The transceiver unit 920 is configured to perform specific signal sending and receiving under driving of the processing unit 910.

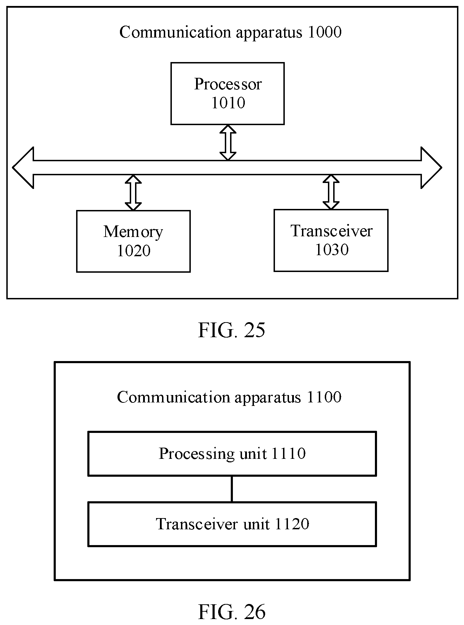

It should be understood that, the transceiver unit 920 may be implemented by using a transceiver, the processing unit 910 may be implemented by using a processor, and the storage unit 930 may be implemented by using a memory. As shown in FIG. 25, a communication apparatus 1000 may include a processor 1010, a memory 1020, and a transceiver 1030.

The communication apparatus 900 shown in FIG. 24 or the communication apparatus 1000 shown in FIG. 25 can implement the steps performed by the first terminal device in the foregoing embodiments of the method 400 and the embodiments shown in FIG. 17 to FIG. 19. For similar descriptions, refer to the descriptions in the foregoing corresponding method. To avoid repetition, details are not described herein again.

It should be further understood that the communication apparatus 900 shown in FIG. 24 or the communication apparatus 1000 shown in FIG. 25 may be a terminal device.

FIG. 26 is a schematic block diagram of a communication apparatus 1100 according to an embodiment of this application. The apparatus 1100 may correspond to the second terminal device described in the embodiments of the foregoing methods, or may be a chip or a component used in the second terminal device. In addition, modules or units in the apparatus 1100 are configured to perform the foregoing method 400 and actions or processing processes performed by the second terminal device in the embodiments. As shown in FIG. 26, the communication apparatus 1100 may include a processing unit 1110 and a transceiver unit 1120.

The processing unit 1110 is configured to obtain a second time-frequency resource, where the second time-frequency resource is used to receive a sidelink reference signal.

The transceiver unit 1120 is configured to receive, on the second time-frequency resource, the sidelink reference signal and indication information from a first terminal device, where the indication information is used to indicate configuration information of the reference signal, and the sidelink reference signal is used to determine a channel status of a sidelink between the first terminal device and the second terminal device; and the communication apparatus is the second terminal device, or the second terminal device includes the communication apparatus.

Optionally, in some embodiments of this application, the indication information is the configuration information of the sidelink reference signal, or the indication information is indication information of the configuration information of the sidelink reference signal.

Optionally, in some embodiments of this application, the indication information is a resource index of the sidelink reference signal, and the resource index of the sidelink reference signal corresponds to the configuration information of the sidelink reference signal.

Optionally, in some embodiments of this application, the configuration information of the sidelink reference signal includes one or more of the following information:
a bandwidth of the sidelink reference signal, a quantity of antenna ports of the sidelink reference signal, a quantity of symbols occupied by the sidelink reference signal, a density of the sidelink reference signal, a code division multiplexing manner of the sidelink reference signal, a resource mapping mode of the sidelink reference signal, and a scrambling identity of the sidelink reference signal.

Optionally, in some embodiments of this application, the transceiver unit 1120 is further configured to: receive configuration information of the second time-frequency resource from a network device or the first terminal device.

Optionally, the transceiver unit 1120 may include a receiving unit (module) and a sending unit (module), configured to perform the steps of sending information and receiving information that are performed by the second terminal device in the foregoing embodiments of the method 300 and the embodiments shown in FIG. 17 to FIG. 19. Optionally, the communication apparatus 1100 may further include a storage unit 1130, configured to store instructions executed by the processing unit 1110 and the transceiver unit 1120. The processing unit 1110, the transceiver unit 1120, and the storage unit 1130 are in communication connection. The storage unit 1130 stores the instructions. The processing unit 1110 is configured to execute the instructions stored in the storage unit 1130. The transceiver unit 1120 is configured to perform specific signal sending and receiving under driving of the processing unit 1110.

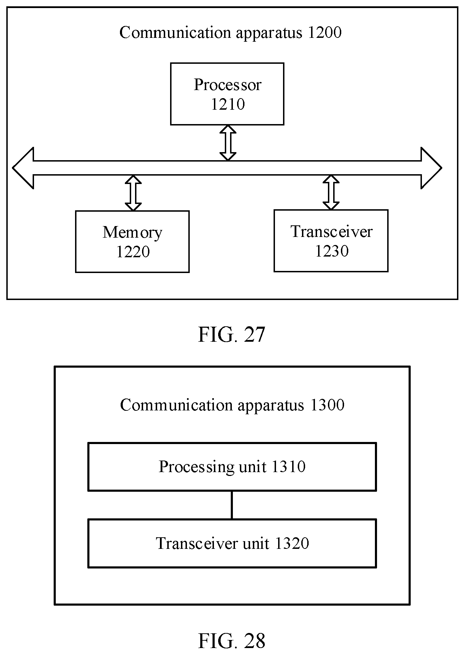

It should be understood that, the transceiver unit 1120 may be implemented by using a transceiver, the processing unit 1110 may be implemented by using a processor, and the storage unit 1130 may be implemented by using a memory. As shown in FIG. 27, a communication apparatus 1200 may include a processor 1210, a memory 1220, and a transceiver 1230.

The communication apparatus 1100 shown in FIG. 26 or the communication apparatus 1200 shown in FIG. 27 can implement the steps performed by the second terminal device in the foregoing embodiments of the method 400 and the embodiments shown in FIG. 17 to FIG. 19. For similar descriptions, refer to the descriptions in the foregoing corresponding method. To avoid repetition, details are not described herein again.

It should be further understood that the communication apparatus 1100 shown in FIG. 26 or the communication apparatus 1200 shown in FIG. 27 may be a terminal device.

FIG. 28 is a schematic block diagram of a communication apparatus 1300 according to an embodiment of this application. The apparatus 1300 may correspond to the network device described in the embodiments of the foregoing methods, or may be a chip or a component used in the network device. In addition, modules or units in the apparatus 1300 are configured to perform the foregoing method 300 and actions or processing processes performed by the network device in the embodiments. As shown in FIG. 22, the communication apparatus 1300 may include a processing unit 1310 and a transceiver unit 1320.

The processing unit 1310 is configured to determine a second time-frequency resource, where the second time-frequency resource is used to send a sidelink reference signal, and the sidelink reference signal is used to determine a channel status of a sidelink between a first terminal device and a second terminal device.

The transceiver unit 1320 is configured to send configuration information of the second time-frequency resource to the first terminal device and/or the second terminal device.

Optionally, in some embodiments of this application, the processing unit 1310 is specifically configured to: determine a sidelink resource set, where a time-frequency resource in the sidelink resource set is used to transmit sidelink information; and determine the second time-frequency resource in the sidelink resource set.

Optionally, in some embodiments of this application, the transceiver unit 1320 is further configured to:
receive, from the first terminal device and/or the second terminal device, request information for the second time-frequency resource.

It should be understood that for a specific process in which the units in the apparatus 1300 perform the foregoing corresponding steps, refer to the foregoing related descriptions of the network device in the related embodiments of the method 300 with reference to FIG. 3 to FIG. 13. For brevity, details are not described herein again.

Optionally, the transceiver unit 1320 may include a receiving unit (module) and a sending unit (module), configured to perform the steps of sending information and receiving information that are performed by the network device in the foregoing embodiments of the methods 300 and 400 and the embodiments shown in FIG. 15 and FIG. 18. Optionally, the communication apparatus 1300 may further include a storage unit 1330, configured to store instructions executed by the processing unit 1310 and the transceiver unit 1320. The processing unit 1310, the transceiver unit 1320, and the storage unit 1330 are in communication connection. The storage unit 1330 stores the instructions. The processing unit 1310 is configured to execute the instructions stored in the storage unit 1330. The transceiver unit 1320 is configured to perform specific signal sending and receiving under driving of the processing unit 1310.

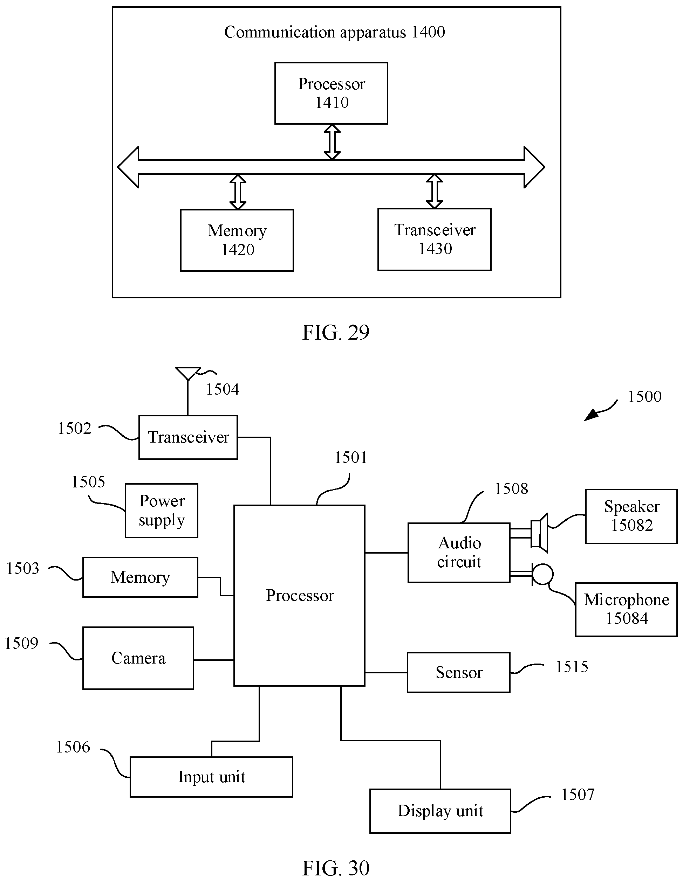

It should be understood that, the transceiver unit 1320 may be implemented by using a transceiver, the processing unit 1310 may be implemented by using a processor, and the storage unit 1330 may be implemented by using a memory. As shown in FIG. 29, a communication apparatus 1400 may include a processor 1410, a memory 1420, and a transceiver 1430.

The communication apparatus 1300 shown in FIG. 28 or the communication apparatus 2400 shown in FIG. 29 can implement the steps performed by the network device in the foregoing embodiments of the methods 300 and 400 and the embodiments shown in FIG. 15 to FIG. 18. For similar descriptions, refer to the descriptions in the foregoing corresponding method. To avoid repetition, details are not described herein again.

It should be further understood that the communication apparatus 1300 shown in FIG. 28 or the communication apparatus 1400 shown in FIG. 29 may be a network device.

It should be further understood that division into the units in the apparatus is merely logical function division. In an actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. Alternatively, each unit may be stored in the memory in a form of a program to be invoked by a processing element of the apparatus to perform a function of the unit. The processing element herein may also be referred to as a processor, and may be an integrated circuit having a signal processing capability. In an implementation process, the steps in the foregoing methods or the foregoing units may be implemented by using a hardware integrated logic circuit in the processing element, or may be implemented in a form of software invoked by the processing element.

In an example, a unit in any one of the foregoing apparatuses may be one or more integrated circuits configured to implement the foregoing methods, for example, one or more application-specific integrated circuits (application specific integrated circuit, ASIC), one or more digital signal processors (digital signal processor, DSP), one or more field programmable gate arrays (field programmable gate array, FPGA), or a combination of at least two of these integrated circuits. For another example, when the unit in the apparatus is implemented by scheduling a program by a processing element, the processing element may be a general purpose processor, for example, a central processing unit (central processing unit, CPU) or another processor that can invoke the program. For still another example, the units may be integrated and implemented in a form of a system-on-a-chip (system-on-a-chip, SOC).

FIG. 30 is a schematic structural diagram of a terminal device 1500 according to an embodiment of this application. As shown in the figure, the terminal device 1500 includes a processor 1501 and a transceiver 1502. Optionally, the terminal device 1500 further includes a memory 1503. The processor 1501, the transceiver 1502, and the memory 1503 may communicate with each other through an internal connection path, to transfer a control signal and/or a data signal. The memory 1503 is configured to store a computer program. The processor 1501 is configured to invoke the computer program from the memory 1503 and run the computer program, to control the transceiver 1502 to send or receive a signal. Optionally, the terminal device 1500 may further include an antenna 1504, configured to send, by using a radio signal, uplink data or uplink control signaling output by the transceiver 1502.

The processor 1501 and the memory 1503 may be combined into a processing apparatus, and the processor 1501 is configured to execute program code stored in the memory 1503 to implement the foregoing functions. During specific implementation, the memory 1503 may alternatively be integrated into the processor 1501, or may be independent of the processor 1501.

Specifically, the terminal device 1500 may correspond to the first terminal device or the second terminal device in the embodiments of the method according to the embodiments of this application, and the embodiments shown in FIG. 9 and FIG. 15 to FIG. 19. The terminal device 1500 may include units configured to perform the method that is performed by the first terminal device or the second terminal device in the embodiments of the method and the embodiments shown in FIG. 9 and FIG. 15 to FIG. 19. In addition, the units in the terminal device 1500 and the foregoing other operations and/or functions are respectively intended to implement corresponding procedures in the embodiments of the method and the embodiments shown in FIG. 9 and FIG. 15 to FIG. 19.

The processor 1501 may be configured to perform an action that is implemented inside the first terminal device or the second terminal device and that is described in the foregoing method embodiments, and the transceiver 1502 may be configured to perform a sending or receiving action that is performed by the first terminal device or the second terminal device and that is described in the foregoing method embodiments. For details, refer to the descriptions in the foregoing method embodiment. Details are not described herein again.

Optionally, the terminal device 1500 may further include a power supply 1505, configured to supply power to various components or circuits in the terminal device.

In addition, to improve functions of the terminal device, the terminal device 1500 may further include one or more of an input unit 1506, a display unit 1507, an audio circuit 1508, a camera 1509, a sensor 1515, and the like, and the audio circuit may further include a speaker 15082, a microphone 15084, and the like.

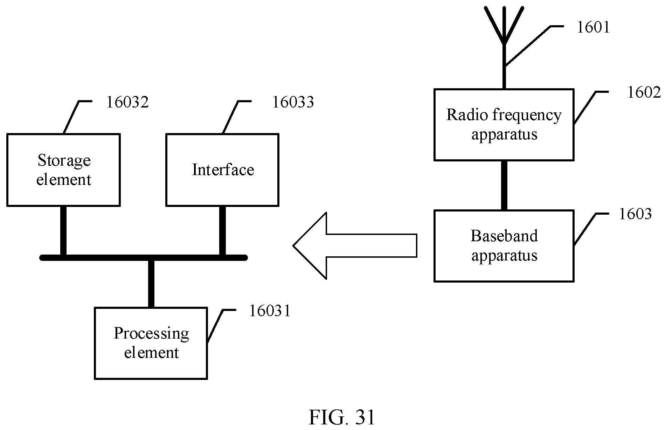

FIG. 31 is a schematic structural diagram of a network device according to an embodiment of this application. The network device is configured to implement operations of the network device in the foregoing embodiments. As shown in FIG. 31, the network device includes an antenna 1601, a radio frequency apparatus 1602, and a baseband apparatus 1603. The antenna 1601 is connected to the radio frequency apparatus 1602. In an uplink direction, the radio frequency apparatus 1602 receives, through the antenna 1601, information sent by a terminal device, and sends the information sent by the terminal device, to the baseband apparatus 1603 for processing. In a downlink direction, the baseband apparatus 1603 processes the information sent by the terminal device and sends the information to the radio frequency apparatus 1602, and the radio frequency apparatus 1602 processes the information sent by the terminal device and then sends the information to the terminal device through the antenna 1601.

The baseband apparatus 1603 may include one or more processing elements 16031, for example, include a main control CPU and another integrated circuit. In addition, the baseband apparatus 1603 may further include a storage element 16032 and an interface 16033. The storage element 16032 is configured to store a program and data. The interface 16033 is configured to exchange information with the radio frequency apparatus 1602, and the interface is, for example, a common public radio interface (common public radio interface, CPRI). The foregoing apparatus used for the network device may be located in the baseband apparatus 1603. For example, the foregoing apparatus used for the network device may be a chip in the baseband apparatus 1603. The chip includes at least one processing element and an interface circuit. The processing element is configured to perform the steps of any method performed by the network device. The interface circuit is configured to communicate with another apparatus. In an implementation, units of the network device that implement the steps in the foregoing methods may be implemented by a program scheduled by a processing element. For example, the apparatus used for the network device includes a processing element and a storage element. The processing element invokes a program stored in the storage element, to perform the methods performed by the network device in the foregoing method embodiments. The storage element may be a storage element located on a same chip as the processing element, namely, an on-chip storage element, or may be a storage element located on a different chip from the processing element, namely, an off-chip storage element.

The terminal device and the network device in the foregoing apparatus embodiments may exactly correspond to the terminal device or the network device in the method embodiments, and a corresponding module or unit performs a corresponding step. For example, when the apparatus is implemented in a form of a chip, the receiving unit may be an interface circuit that is of the chip and that is configured to receive a signal from another chip or apparatus. The foregoing sending unit is an interface circuit of the apparatus, and is configured to send a signal to another apparatus. For example, when the apparatus is implemented by a chip, the sending unit is an interface circuit that is of the chip and that is configured to send a signal to another chip or apparatus.

It should be understood that in the embodiments of this application, the processor may be a CPU, or the processor may be another general purpose processor, a DSP, an ASIC, an FPGA or another programmable logic device, a discrete gate or a transistor logic device, a discrete hardware component, or the like.

It should further be understood that the memory in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The terminal device and the network device in the foregoing apparatus embodiments may exactly correspond to the terminal device or the network device in the method embodiments, and a corresponding module or unit performs a corresponding step. For example, when the apparatus is implemented in a form of a chip, the receiving unit may be an interface circuit that is of the chip and that is configured to receive a signal from another chip or apparatus. The foregoing sending unit is an interface circuit of the apparatus, and is configured to send a signal to another apparatus. For example, when the apparatus is implemented by a chip, the sending unit is an interface circuit that is of the chip and that is configured to send a signal to another chip or apparatus.

An embodiment of this application further provides a communication system. The communication system includes the foregoing first terminal device and/or the foregoing second terminal device, and the foregoing network device.

An embodiment of this application further provides a computer-readable medium, configured to store computer program code. The computer program includes instructions used to perform the sidelink reference signal transmission method in the embodiments of the methods 300 and 400 in this application. The readable medium may be a read-only memory (read-only memory, ROM) or a random access memory (random access memory, RAM). This is not limited in this embodiment of this application.

This application further provides a computer program product. The computer program product includes instructions. When the instructions are executed, the first terminal device, the second terminal device, and the network device are enabled to respectively perform operations corresponding to the first terminal device, the second terminal device, and the network device in the foregoing methods.

An embodiment of this application further provides a system chip. The system chip includes a processing unit and a communication unit. The processing unit may be, for example, a processor, and the communication unit may be, for example, an input/output interface, a pin, or a circuit. The processing unit may execute computer instructions, so that a chip in a communication apparatus performs any sidelink reference signal transmission method provided in the foregoing embodiments of this application.

Optionally, any communication apparatus provided in the foregoing embodiments of this application may include the system chip.

Optionally, the computer instructions are stored in a storage unit.

Optionally, the storage unit is a storage unit inside the chip, such as a register or a cache. Alternatively, the storage unit may be a storage unit that is inside the terminal and that is located outside the chip, such as a ROM, another type of static storage device that can store static information and instructions, or a RAM. The processor mentioned anywhere above may be a CPU, a microprocessor, an ASIC, or one or more integrated circuits configured to control program execution of the sidelink reference signal transmission method. The processing unit and the storage unit may be decoupled, are separately disposed on different physical devices, and are connected in a wired or wireless manner to implement functions of the processing unit and the storage unit, to support the system chip in implementing various functions in the foregoing embodiments. Alternatively, the processing unit and the memory may be coupled to a same device.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Terms "system" and "network" may be used interchangeably in this specification. The term "and/or" in this specification describes only an association relationship for describing associated objects and represents that there may be three relationships. For example, A and/or B may represent the following three cases: Only A exists, both A and B exist, and only B exists. In addition, the character "/" in this specification usually indicates an "or" relationship between the associated objects.

The terms "uplink" and "downlink" in this application are used to describe data/information transmission directions in a specific scenario. For example, an "uplink" direction is usually a direction in which data/information is transmitted from a terminal to a network side, or a direction in which data/information is transmitted from a distributed unit to a centralized unit, and a "downlink" direction is usually a direction in which data/information is transmitted from a network side to a terminal, or a direction in which data/information is transmitted from a centralized unit to a distributed unit. It may be understood that the "uplink" and the "downlink" are only used to describe transmission directions of data/information, and neither a specific start device nor a specific end device of the data/information transmission is limited.

Names may be assigned to various objects that may appear in this application, for example, various messages/information/devices/network elements/systems/apparatuses/actions/operations/procedures/concepts. It may be understood that these specific names do not constitute a limitation on the related objects, and the assigned names may change with a factor such as a scenario, a context, or a use habit. Technical meanings of technical terms in this application should be understood and determined mainly based on functions and technical effects that are of the technical terms and that are reflected/performed in the technical solutions.

A person of ordinary skill in the art may be aware that units, algorithms, and steps in the examples described with reference to the embodiments disclosed in this specification can be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

Units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to a current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sidelink reference signal transmission method, comprising:
obtaining (S310), by a first terminal device, a first time-frequency resource, wherein the first time-frequency resource is used to send sidelink control information and data; and
sending (S320), by the first terminal device on the first time-frequency resource, a sidelink reference signal, the sidelink control information, and the data to a second terminal device, wherein the sidelink reference signal is used to determine a channel status of a sidelink between the first terminal device and the second terminal device, wherein the sidelink reference signal and the data are frequency division multiplexed on a symbol on which the sidelink reference signal is located.

2. The method according to claim 1, wherein the first terminal device sends the sidelink reference signal to the second terminal device on any one or more symbols of the first time-frequency resource.

3. A sidelink reference signal transmission method, comprising:
obtaining, by a second terminal device, a first time-frequency resource, wherein the first time-frequency resource is used to receive sidelink control information and data; and
receiving, by the second terminal device on the first time-frequency resource, a sidelink reference signal, the sidelink control information, and the data from a first terminal device, wherein the sidelink reference signal is used to determine a channel status of a sidelink between the first terminal device and the second terminal device, wherein the sidelink reference signal and the data are frequency division multiplexed on a symbol on which the sidelink reference signal is located.

4. The method according to claim 3 wherein the second terminal device receives the sidelink reference signal from the first terminal device on any one or more symbols of the first time-frequency resource.

5. The method according to claim 3 or 4, wherein a frequency domain bandwidth of the sidelink reference signal is the same as a bandwidth of the first time-frequency resource, or a bandwidth of the sidelink reference signal is the same as a bandwidth of the data.

6. A communication apparatus (500), comprising:
a processing unit (510), configured to obtain a first time-frequency resource, wherein the first time-frequency resource is used to send sidelink control information and data; and
a transceiver unit (520), configured to send, on the first time-frequency resource, a sidelink reference signal, the sidelink control information, and the data to a second terminal device, wherein the sidelink reference signal is used to determine a channel status of a sidelink between a first terminal device and the second terminal device, wherein the sidelink reference signal and the data are frequency division multiplexed on a symbol on which the sidelink reference signal is located; and the communication apparatus is the first terminal device, or the first terminal device comprises the communication apparatus.

7. The apparatus according to claim 6, wherein the transceiver unit is specifically configured to send the sidelink reference signal to the second terminal device on any one or more symbols of the first time-frequency resource.

8. A communication apparatus (700), comprising:
a processing unit (710), configured to obtain a first time-frequency resource, wherein the first time-frequency resource is used to receive sidelink control information and data; and
a transceiver unit (720), configured to receive, on the first time-frequency resource, a sidelink reference signal, the sidelink control information, and the data from a first terminal device, wherein the sidelink reference signal is used to determine a channel status of a sidelink between the first terminal device and a second terminal device, wherein the sidelink reference signal and the data are frequency division multiplexed on a symbol on which the sidelink reference signal is located; and the communication apparatus is the second terminal device, or the second terminal device comprises the communication apparatus.

9. The apparatus according to claim 8, wherein the transceiver unit is configured to receive the sidelink reference signal from the first terminal device on any one or more symbols of the first time-frequency resource.

10. The apparatus according to any one of claims 8 to 9, wherein a frequency domain bandwidth of the sidelink reference signal is the same as a bandwidth of the first time-frequency resource, or a bandwidth of the sidelink reference signal is the same as a bandwidth of the data.

11. A computer readable storage medium, wherein the computer readable storage medium stores a program; and when the program is run by a processor, the method according to any one of claims 1 to 5 is performed.

## Patentansprüche

1. Verfahren zur Übertragung von Sidelink-Referenzsignalen, umfassend:
Erlangen (S310), durch eine erste Endgerätevorrichtung, einer ersten Zeit-Frequenz-Ressource, wobei die erste Zeit-Frequenz-Ressource dazu verwendet wird, Sidelink-Steuerinformationen und -daten zu senden; und
Senden (S320), durch die erste Endgerätevorrichtung auf der ersten Zeit-Frequenz-Ressource, eines Sidelink-Referenzsignals, der Sidelink-Steuerinformationen und der Daten an eine zweite Endgerätevorrichtung, wobei das Sidelink-Referenzsignal dazu verwendet wird, einen Kanalstatus eines Sidelinks zwischen der ersten Endgerätevorrichtung und der zweiten Endgerätevorrichtung zu bestimmen, wobei das Sidelink-Referenzsignal und die Daten auf einem Symbol, auf dem sich das Sidelink-Referenzsignal befindet, frequenzgemultiplext werden.

2. Verfahren nach Anspruch 1, wobei die erste Endgerätevorrichtung das Sidelink-Referenzsignal an die zweite Endgerätevorrichtung auf einem oder mehreren beliebigen Symbolen der ersten Zeit-Frequenz-Ressource sendet.

3. Verfahren zur Übertragung von Sidelink-Referenzsignalen, umfassend:
Erlangen, durch eine zweite Endgerätevorrichtung, einer ersten Zeit-Frequenz-Ressource, wobei die erste Zeit-Frequenz-Ressource dazu verwendet wird, Sidelink-Steuerinformationen und -daten zu empfangen; und
Empfangen, durch die zweite Endgerätevorrichtung auf der ersten Zeit-Frequenz-Ressource, eines Sidelink-Referenzsignals, der Sidelink-Steuerinformationen und der Daten von einer ersten Endgerätevorrichtung, wobei das Sidelink-Referenzsignal dazu verwendet wird, einen Kanalstatus eines Sidelinks zwischen der ersten Endgerätevorrichtung und der zweiten Endgerätevorrichtung zu bestimmen, wobei das Sidelink-Referenzsignal und die Daten auf einem Symbol, auf dem sich das Sidelink-Referenzsignal befindet, frequenzgemultiplext werden.

4. Verfahren nach Anspruch 3, wobei die zweite Endgerätevorrichtung das Sidelink-Referenzsignal von der ersten Endgerätevorrichtung auf einem oder mehreren beliebigen Symbolen der ersten Zeit-Frequenz-Ressource empfängt.

5. Verfahren nach Anspruch 3 oder 4, wobei eine Frequenzdomänenbandbreite des Sidelink-Referenzsignals dieselbe ist wie eine Bandbreite der ersten Zeit-Frequenz-Ressource oder eine Bandbreite des Sidelink-Referenzsignals dieselbe ist wie eine Bandbreite der Daten.

6. Kommunikationseinrichtung (500), umfassend:
eine Verarbeitungseinheit (510), die dazu konfiguriert ist, eine erste Zeit-Frequenz-Ressource zu erlangen, wobei die erste Zeit-Frequenz-Ressource dazu verwendet wird, Sidelink-Steuerinformationen und -daten zu senden; und
eine Transceiver-Einheit (520), die dazu konfiguriert ist, auf der ersten Zeit-Frequenz-Ressource ein Sidelink-Referenzsignal, die Sidelink-Steuerinformationen und die Daten an eine zweite Endgerätevorrichtung zu senden, wobei das Sidelink-Referenzsignal dazu verwendet wird, einen Kanalstatus eines Sidelinks zwischen einer ersten Endgerätevorrichtung und der zweiten Endgerätevorrichtung zu bestimmen, wobei das Sidelink-Referenzsignal und die Daten auf einem Symbol, auf dem sich das Sidelink-Referenzsignal befindet, frequenzgemultiplext werden; und die Kommunikationseinrichtung die erste Endgerätevorrichtung ist oder die erste Endgerätevorrichtung die Kommunikationseinrichtung umfasst.

7. Einrichtung nach Anspruch 6, wobei die Transceivereinheit insbesondere dazu konfiguriert ist, das Sidelink-Referenzsignal an die zweite Endgerätevorrichtung auf einem oder mehreren beliebigen Symbolen der ersten Zeit-Frequenz-Ressource zu senden.

8. Kommunikationseinrichtung (700), umfassend:
eine Verarbeitungseinheit (710), die dazu konfiguriert ist, eine erste Zeit-Frequenz-Ressource zu erlangen, wobei die erste Zeit-Frequenz-Ressource dazu verwendet wird, Sidelink-Steuerinformationen und -daten zu empfangen; und
eine Transceiver-Einheit (720), die dazu konfiguriert ist, auf der ersten Zeit-Frequenz-Ressource ein Sidelink-Referenzsignal, die Sidelink-Steuerinformationen und die Daten von einer ersten Endgerätevorrichtung zu empfangen, wobei das Sidelink-Referenzsignal dazu verwendet wird, einen Kanalstatus eines Sidelinks zwischen der ersten Endgerätevorrichtung und einer zweiten Endgerätevorrichtung zu bestimmen, wobei das Sidelink-Referenzsignal und die Daten auf einem Symbol, auf dem sich das Sidelink-Referenzsignal befindet, frequenzgemultiplext werden; und die Kommunikationseinrichtung die zweite Endgerätevorrichtung ist oder die zweite Endgerätevorrichtung die Kommunikationseinrichtung umfasst.

9. Einrichtung nach Anspruch 8, wobei die Transceivereinheit dazu konfiguriert ist, das Sidelink-Referenzsignal von der ersten Endgerätevorrichtung auf einem oder mehreren beliebigen Symbolen der ersten Zeit-Frequenz-Ressource zu empfangen.

10. Einrichtung nach einem der Ansprüche 8 bis 9, wobei eine Frequenzdomänenbandbreite des Sidelink-Referenzsignals dieselbe ist wie eine Bandbreite der ersten Zeit-Frequenz-Ressource oder eine Bandbreite des Sidelink-Referenzsignals dieselbe ist wie eine Bandbreite der Daten.

11. Computerlesbares Speichermedium, wobei das computerlesbare Speichermedium ein Programm speichert; und, wenn das Programm durch einen Prozessor ausgeführt wird, das Verfahren nach einem der Ansprüche 1 bis 5 durchgeführt wird.

## Revendications

1. Procédé de transmission de signal de référence de liaison latérale, comprenant :
l'obtention (S310), par un premier dispositif terminal, d'une première ressource temps-fréquence, dans lequel la première ressource temps-fréquence est utilisée pour envoyer des informations de commande de liaison latérale et des données ; et
l'envoi (S320), par le premier dispositif terminal sur la première ressource temps-fréquence, d'un signal de référence de liaison latérale, des informations de commande de liaison latérale, et des données à un second dispositif terminal, dans lequel le signal de référence de liaison latérale est utilisé pour déterminer un état de canal d'une liaison latérale entre le premier dispositif terminal et le second dispositif terminal, dans lequel le signal de référence de liaison latérale et les données sont multiplexés par répartition en fréquence sur un symbole sur lequel se trouve le signal de référence de liaison latérale.

2. Procédé selon la revendication 1, dans lequel le premier dispositif terminal envoie le signal de référence de liaison latérale au second dispositif terminal sur un ou plusieurs symboles quelconques de la première ressource temps-fréquence.

3. Procédé de transmission de signal de référence de liaison latérale, comprenant :
l'obtention, par un second dispositif terminal, d'une première ressource temps-fréquence, dans lequel la première ressource temps-fréquence est utilisée pour recevoir des informations de commande de liaison latérale et des données ; et
la réception, par le second dispositif terminal sur la première ressource temps-fréquence, d'un signal de référence de liaison latérale, des informations de commande de liaison latérale, et des données provenant d'un premier dispositif terminal, dans lequel le signal de référence de liaison latérale est utilisé pour déterminer un état de canal d'une liaison latérale entre le premier dispositif terminal et le second dispositif terminal, dans lequel le signal de référence de liaison latérale et les données sont multiplexés par répartition en fréquence sur un symbole sur lequel se trouve le signal de référence de liaison latérale.

4. Procédé selon la revendication 3, dans lequel le second dispositif terminal reçoit le signal de référence de liaison latérale provenant du premier dispositif terminal sur un ou plusieurs symboles quelconques de la première ressource temps-fréquence.

5. Procédé selon la revendication 3 ou 4, dans lequel une bande passante de domaine de fréquence du signal de référence de liaison latérale est la même qu'une bande passante de la première ressource temps-fréquence, ou une bande passante du signal de référence de liaison latérale est la même qu'une bande passante des données.

6. Appareil de communication (500), comprenant :
une unité de traitement (510), configurée pour obtenir une première ressource temps-fréquence, dans lequel la première ressource temps-fréquence est utilisée pour envoyer des informations et des données de commande de liaison latérale ; et
une unité d'émission-réception (520), configurée pour envoyer, sur la première ressource temps-fréquence, un signal de référence de liaison latérale, les informations de commande de liaison latérale, et les données à un second dispositif terminal, dans lequel le signal de référence de liaison latérale est utilisé pour déterminer un état de canal d'une liaison latérale entre un premier dispositif terminal et le second dispositif terminal, dans lequel le signal de référence de liaison latérale et les données sont multiplexés par répartition en fréquence sur un symbole sur lequel se trouve le signal de référence de liaison latérale ; et l'appareil de communication est le premier dispositif terminal, ou le premier dispositif terminal comprend l'appareil de communication.

7. Appareil selon la revendication 6, dans lequel l'unité d'émission-réception est spécifiquement configurée pour envoyer le signal de référence de liaison latérale au second dispositif terminal sur un ou plusieurs symboles quelconques de la première ressource temps-fréquence.

8. Appareil de communication (700), comprenant :
une unité de traitement (710), configurée pour obtenir une première ressource temps-fréquence, dans lequel la première ressource temps-fréquence est utilisée pour recevoir des informations de commande de liaison latérale et des données ; et
une unité d'émission-réception (720), configurée pour recevoir, sur la première ressource temps-fréquence, un signal de référence de liaison latérale, les informations de commande de liaison latérale, et les données provenant d'un premier dispositif terminal, dans lequel le signal de référence de liaison latérale est utilisé pour déterminer un état de canal d'une liaison latérale entre le premier dispositif terminal et un second dispositif terminal, dans lequel le signal de référence de liaison latérale et les données sont multiplexés par répartition en fréquence sur un symbole sur lequel se trouve le signal de référence de liaison latérale ; et
l'appareil de communication est le second dispositif terminal, ou le second dispositif terminal comprend l'appareil de communication.

9. Appareil selon la revendication 8, dans lequel l'unité d'émission-réception est configurée pour recevoir le signal de référence de liaison latérale provenant du premier dispositif terminal sur un ou plusieurs symboles quelconques de la première ressource temps-fréquence.

10. Appareil selon la revendication 8 et 9, dans lequel une bande passante de domaine de fréquence du signal de référence de liaison latérale est la même qu'une bande passante de la première ressource temps-fréquence, ou une bande passante du signal de référence de liaison latérale est la même qu'une bande passante des données.

11. Support de stockage lisible par ordinateur, dans lequel le support de stockage lisible par ordinateur stocke un programme ; et lorsque le programme est exécuté par un processeur, le procédé selon l'une quelconque des revendications 1 à 5 est réalisé.
